# EUROPEAN PATENT SPECIFICATION

(11) **EP 3 731 547 B1**
(45) Date of publication and mention of the grant of the patent: **28.08.2024**
(21) Application number: 18890992.3
(22) Date of filing: 20.12.2018
(51) Int. Cl.: H04W 4/40, H04W 4/38, H04W 4/12, H04W 4/44, H04W 4/46

(54) **DEVICE AND METHOD FOR V2X COMMUNICATION**
VORRICHTUNG UND VERFAHREN FÜR V2X-KOMMUNIKATION
DISPOSITIF ET PROCÉDÉ DE COMMUNICATION V2X

(30) Priority: 20.12.2017 US 201762607921 P
(43) Date of publication of application: 28.10.2020
(73) Proprietor: LG Electronics Inc., SEOUL, 07336 (KR)
(72) Inventor: HWANG, Jaeho, Seoul 06772 (KR); KO, Woosuk, Seoul 06772 (KR); YANG, Seungryul, Seoul 06772 (KR)
(74) Representative: Maikowski & Ninnemann Patentanwälte Partnerschaft mbB
(86) International application number: PCT/KR2018/016381
(87) International publication number: WO 2019/125022

(56) References cited:
- EP-A1- 3 121 729
- US-B2- 8 922 391
- GUNTHER HENDRIK-JORN ET AL: "Realizing collective perception in a vehicle", 2016 IEEE VEHICULAR NETWORKING CONFERENCE (VNC), IEEE, 8 December 2016 (2016-12-08), pages 1 - 8, XP033052773, [retrieved on 20170127], DOI: 10.1109/VNC.2016.7835930
- "Intelligent Transport Systems (ITS); Vehicular Communications; Basic Set of Applications; Analysis of the Collective Perception Service (CPS)", vol. WG ITS WG1 Application Requirements and Services, no. V0.0.3, 25 August 2017 (2017-08-25), pages 1 - 16, XP014303325, Retrieved from the Internet <URL:docbox.etsi.org/ITS/ITSWG1/70-Draft/WG183/ITS-00183v003.docx> [retrieved on 20170825]
- GUNTHER HENDRIK-JORN ET AL: "Realizing collective perception in a vehicle", 2016 IEEE VEHICULAR NETWORKING CONFERENCE (VNC), IEEE, 8 December 2016 (2016-12-08), pages 1 - 8, XP033052773, DOI: 10.1109/VNC.2016.7835930
- VOLKSWAGEN AG: "Draft - DTR/ITS-00183 v0.0.2 (TR 103 562 ) Informative Report for the Collective Perception Service", no. .0.2, 22 August 2017 (2017-08-22), pages 1 - 15, XP014298639, Retrieved from the Internet <URL:docbox.etsi.org\ITS\ITSWG1\05-CONTRIBUTIONS\2017\ITSWG1(17)000021_Draft_-_DTR_ITS-00183__v0_0_2__TR_103_562____Informative_Rep\ITS-00183v002.docx> [retrieved on 20170822]
- GUNTHER, HENDRIK-JORN ET AL.: "Realizing Collective Perception in a Vehicle", 2016 IEEE VEHICULAR NETWORKING CONFERENCE (VNC, 30 January 2017 (2017-01-30), XP033052773
- RAUCH, ANDREAS ET AL.: "Inter-Vehicle Object Association for Cooperative Perception Systems", 16TH INTERNATIONAL IEEE ANNUAL CONFERENCE ON INTELLIGENT TRANSPORTATION SYSTEMS (ITSC 2013, 6 October 2013 (2013-10-06), pages 893 - 898, XP055620006, ISBN: 978-1-4799-2914-6, DOI: 10.1109/ITSC.2013.6728345
- RAUCH, ANDREAS ET AL.: "Analysis of V2X Communication Parameters for the Development of a Fusion Architecture for Cooperative Perception Systems", 2011 IEEE INTELLIGENT VEHICLES SYMPOSIUM (IV, 5 July 2011 (2011-07-05), pages 685 - 690, XP031998989

## Description

### [Technical Field]

- The present disclosure relates to a device and method for V2X communication, and more particularly to a method of efficiently providing, by a V2X communication device, a collective perception (CP) service transmitting a surrounding vehicle state.

### [Background Art]

In recent years, a vehicle has become the result of the industrial convergence technology in which an electric technology, an electronic technology, and a communication technology are mixed, rather than the result of mechanical engineering technology. For this reason, the vehicle is also called a smart car. The smart car will provide not only a traditional vehicular technology, such as traffic safety and solving a traffic congestion, but also various user-customized transport services in the future by connecting a driver, a vehicle, a transport infrastructure, etc, one another. Such connectivity may be implemented using a vehicle-to-everything (V2X) communication technology. A system that provides the connectivity of a vehicle may also be referred to as a connected vehicle system.

Examples of such systems are described in:
GUNTHER HENDRIK-JORN ET AL: "Realizing collective perception in a vehicle", 2016 IEEE VEHICULAR NETWORKING CONFERENCE (VNC), IEEE, 8 December 2016 (2016-12-08). pages 1-8; and
VOLKSWAGEN AG: "Draft - DTR/ITS-00183 1-12 v0.0.2 (TR 103 562) Informative Report for the Collective Perception Service", ETSI DRAFT; ITSWG1(17)000021, EUROPEAN TELECOMMUNICATIONS STANDARDS INSTITUTE (ETSI), 650, ROUTE DES LUCIOLES; F-06921 SOPHIA-ANTIPOLIS; FRANCE.

### [Disclosure]

### [Technical Problem]

- Various services can be provided through V2X communication. An ITS system of a vehicle performing the V2X communication can provide various services for traffic safety and efficiency. One of the services is a cooperative awareness (CA) service. Cooperative awareness within road traffic means that a road user and roadside infrastructure can be aware of mutual positions, dynamics and attributes. Such awareness is a basic for several road safety and traffic efficiency applications.
- As described above, the CA service can support traffic safety in such a manner that a V2X communication device periodically provides its own position and state to surrounding V2X communication devices. However, the CA service has limits in that only information of a corresponding V2X communication device itself can be shared. In order to complement the limits, there is a need for the development of a service using a new method.

### [Technical Solution]

- The subject-matter of the claims is presented. In order to solve the above-described and other technical problems, the present disclosure provides a device and method for V2X communication

### [Advantageous Effects]

- Embodiments of the disclosure can increase the convenience of implementation by including commonly data in existing CAM and DENM messages by defining a new message structure for providing a CP service.
- Further, embodiments of the disclosure can significantly increase the predictability of reliability of objects detected by sensors by more efficiently describing sensor information mounted on a V2X vehicle.

### [Description of Drawings]

- The accompanying drawings, that are included to provide a further understanding of the present disclosure and are incorporated in and constitute a part of this specification, illustrate embodiments of the present disclosure and together with the description serve to explain various principles of the present disclosure.
   - FIG. 1 illustrates an exemplary architecture of a V2X communication device according to an embodiment of the disclosure.
   - FIG. 2 illustrates a method of processing a V2X message according to an embodiment of the disclosure.
   - FIG. 3 illustrates an architecture of a V2X communication device providing a CP service according to an embodiment of the disclosure.
   - FIG. 4 illustrates a function block diagram of a CP service according to an embodiment of the disclosure.
   - FIG. 5 illustrates a CPM structure according to an embodiment of the disclosure.
   - FIG. 6 illustrates a method of extracting sensor data by a V2X communication device providing a CP service according to an embodiment of the disclosure.
   - FIG. 7 illustrates a CP service as an embodiment to which the present disclosure is applicable.
   - FIG. 8 illustrates a structure of a CPM message according to an embodiment to which the present disclosure is applied.
   - FIG. 9 illustrates a header data format of a CPM message according to an embodiment of the disclosure.
   - FIGS. 10 and 11 illustrate a structure and a header data format of a CPM message according to an embodiment of the disclosure.
   - FIG. 12 illustrates a sensor type data element included in an existing CPM message.
   - FIG. 13 illustrates a sensor type data element according to an embodiment of the disclosure.
   - FIGS. 14 and 15 illustrate a sensor type data element format according to an embodiment of the disclosure.
   - FIG. 16 illustrates a method of transmitting sensor information according to an embodiment of the disclosure.
   - FIG. 17 illustrates sensor type data including URL information according to an embodiment of the disclosure.
   - FIG. 18 is a flow chart illustrating a method of generating a CPM message according to an embodiment of the disclosure.
   - FIG. 19 is a flow chart illustrating a method of decoding a CPM message according to an embodiment to which the present disclosure is applied.
   - FIG. 20 illustrates a format of object classification data according to an embodiment of the disclosure.
   - FIG. 21 illustrates a structure of object data according to an embodiment of the disclosure.
   - FIG. 22 illustrates a format of object classification data according to an embodiment of the disclosure.
   - FIG. 23 illustrates a data format of object lane information according to an embodiment of the disclosure.
   - FIG. 24 illustrates a data format of object lane information according to an embodiment of the disclosure.
   - FIGS. 25 and 26 illustrate object lane type information and data format according to an embodiment of the disclosure.
   - FIG. 27 illustrates a method of expressing object lane information according to an embodiment of the disclosure.
   - FIG. 28 illustrates a data format representing object lane information according to an embodiment of the disclosure.
   - FIG. 29 illustrates a method of expressing object lane information according to an embodiment of the disclosure.
   - FIG. 30 illustrates a data format representing object lane information according to an embodiment of the disclosure.
   - FIG. 31 illustrates configuration of a V2X communication device according to an embodiment of the disclosure.
   - FIG. 32 is a flow chart illustrating a method of sending an ITS message by a V2X communication device according to an embodiment of the disclosure.

### [Best Model

• Preferred embodiments of the disclosure will be described in detail with reference to the accompanying drawings. The following detailed description with reference to the accompanying drawings is to illustrate preferred embodiments of the disclosure rather than illustrate only embodiments that can be implemented according to embodiments of the disclosure. The following detailed description includes details in order to provide the full understanding of the present disclosure, but the present disclosure does not require all of these details. The following embodiments of the disclosure do not need to be separately used. A plurality of embodiments or all embodiments may be together used, and specific embodiments may be used in combination with each other.
• Most of the terms used in the present disclosure are selected from common ones widely used in the corresponding field, but some terms are arbitrarily selected by the applicant and the meaning thereof will be described in detail in the following description as necessary. Therefore, the present disclosure should be understood based on the intended meanings of the terms rather than the simple names or meanings of the terms.
• The present disclosure relates to a V2X communication device. The V2X communication device is included in an intelligent transport system (ITS) and may perform some or all of functions of the ITS system. The V2X communication device may perform communication between a vehicle and a vehicle, a vehicle and infrastructure, a vehicle and a bicycle, a vehicle and a mobile device, etc. In one embodiment, the V2X communication device may correspond to an on-board unit (OBU) of a vehicle or may be included in the OBU. The OBU may be referred to as an on-board equipment (OBE). The V2X communication device may correspond to a road side unit (RSU) of infrastructure or may be included in an RSU. The RSU may be referred to as a roadside equipment (RSE). Alternatively, the V2X communication device may correspond to an ITS station or may be included in the ITS station. All of given OBU, RSU and mobile equipment that perform V2X communication may be referred to as ITS stations. Alternatively, the V2X communication device may correspond to a wireless access in vehicular (WAVE) device or may be included in the WAVE device. The V2X communication device may be abbreviated to a V2X device.
• Hereinafter, a collective perception (CP) service provided by the V2X communication device and a basic structure of a CP message (CPM) for the CP service (hereinafter, may be referred to as CPS) are first described. Furthermore, various embodiments of a CPM structure for performance improvements of the CP service are described. In the present disclosure, various embodiments are described, assuming that the V2X communication device generating the CPM is a V2X communication device of a vehicle. However, the following embodiments described below may be applied to a V2X communication device of an RSU or a personal V2X communication device in the same or similar manner, if necessary or desired. In the present disclosure, the CPM may also be referred to as a CPM message.

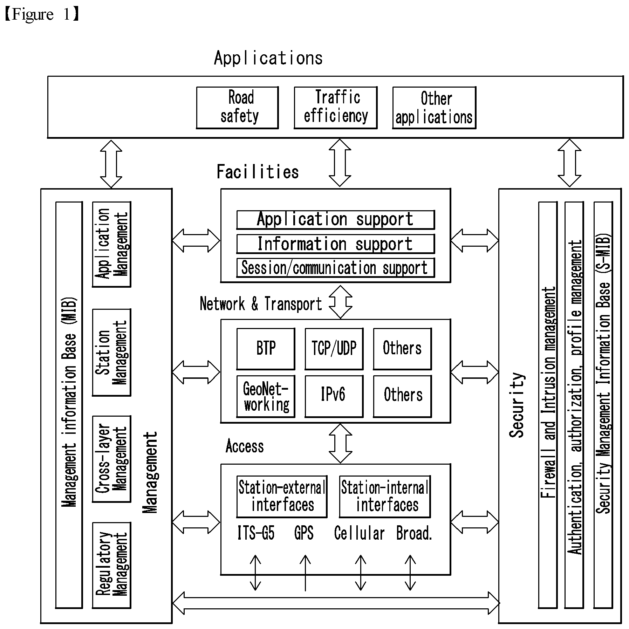

• FIG. 1 illustrates an exemplary architecture of a V2X communication device according to an embodiment of the disclosure. FIG. 1 illustrates an exemplary architecture of a V2X communication device that can be implemented based on, for example, a reference architecture of an ITS station according to the EU standard.
• Application layer: The application layer may implement and support various use cases. For example, an application may provide road safety, efficient traffic information, and other application information.
• Facilities layer: The facilities layer may support effective implementation of the various use cases defined in the application layer.
• This facilities layer may basically support the same or similar functions as the upper three layers of an OSI model. In addition, the facilities layer may provide facilities for the V2X communication device. For example, the facilities layer may provide facilities such as application support, information support, and session/communication support. Here, the facilities refer to a component that provides functionality, information, and data. The three facilities proposed as an example will be described as follows.
• The application support facilities refer to facilities that support a basic application set (or message set). In the V2X communication device of FIG. 1, the facilities layer may support a V2X message, for example, a periodic message such as a CAM or an event message such as a decentralized environmental notification messages (DENM). The facilities layer may also support, for example, a CPM message.
• The information support facilities refer to facilities that provide common data information or database used for a basic application set (or message set) and may be, for example, a local dynamic map (LDM).
• The session/communication support facilities refer to facilities that provide services for communication and session management and may be an addressing mode, a session support, etc.
• As described above, the facilities layer supports the application set (or message set) as one of main functions thereof. That is, the facilities layer performs a role of generating a message set (or message) based on information to be transmitted or a service to be provided by the application layer. The message thus generated may be referred to as a V2X message, which will be described in detail below with reference to the accompanying drawings.
• Access layer: The access layer may transmit the message/data received at the upper layers through a physical channel. For example, the access layer may perform/support data communication based on an IEEE 802.11 and/or 802.11p standards-based communication technology, an ITS-G5 wireless communication technology based on a physical transmission technology of the IEEE 802.11 and/or 802.11p standards, a 2G/3G/4G (LTE)/5G wireless cellular communication technology including satellite/broadband wireless mobile communication, a broadband terrestrial digital broadcasting technology such as DVB-T/T2/ATSC, a GPS technology, an IEEE 1609 WAVE technology, and the like.
• Networking and transport layer: The networking/transport layer may configure a network for vehicle communication between homogenous/heterogeneous networks by using various transport protocols and networkin protocols.
• The transport layer is a connection layer between services provided by the upper layers (session layer, presentation layer, and application layer) and the lower layers (network layer, data link layer, and physical layer). The transport layer may manage transmitted data to exactly arrive at a destination. At the transmitting side, the transport layer may process data into packets of an appropriate size for efficient data transmission, and at the receiving side, the transport layer may perform processing to recover the received packets to an original file. In an embodiment, protocols such as transmission control protocol (TCP), user datagram protocol (UDP), and basic transport protocol (BTP) may be used as a transport protocol.
• The network layer may manage a logical address and may determine a delivery path of the packet. The network layer may receive the packet generated in the transport layer and may add the logical address of the destination to a network layer header. In an embodiment, the packet path may be considered for unicast/broadcast between vehicles, between vehicles and fixed stations, and between fixed stations. In an embodiment, geo-networking, IPv6 networking with mobility support, and IPv6 over geo-networking may be considered as the networking protocol.
• The exemplary architecture of the V2X communication device may further include a management layer and a security layer.

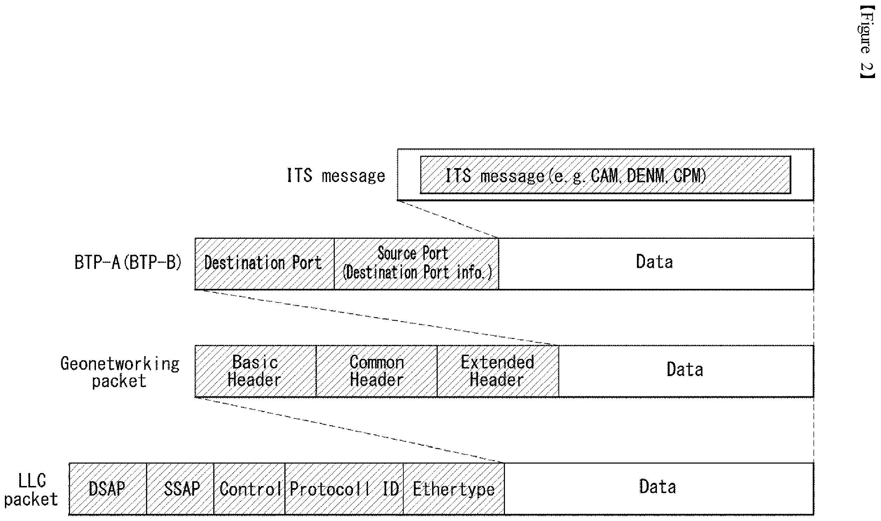

• FIG. 2 illustrates a method of processing a V2X message according to an embodiment of the disclosure. The V2X message may be referred to as an ITS message.
• As described above, the application layer or the facilities layer may generate a V2X message. For example, a CAM, a DENM, or a CPM may be generated as the V2X message.
• The transport layer may generate a BTP packet, and the network layer may encapsulate the BTP packet to generate a GeoNetworking packet. The GeoNetworking packet may be encapsulated into an LLC packet. In an embodiment of FIG. 2, data may include a message set, and the message set may be a basic safety message.
• BTP is a protocol for transmitting the V2X message generated in the facilities layer to the lower layer. A BTP header consists of A type and B type. The A type BTP header may include a destination/destination port and a source port, which are necessary for transmission/reception in interactive packet transmission. The B type BTP header may include a destination port and destination port information necessary for transmission in non-interactive packet transmission. A description of fields/information included in the header is as follows.
• Destination Port: The destination port identifies a facility entity corresponding to a destination of data (BTP-PDU) included in the BTP packet.
• Source Port: As a field generated in the case of the BTP-A type, the sound port indicates a port of a protocol entity of the facilities layer at a source to which the corresponding packet is transmitted. This field may have a size of 16 bits.
• Destination Port Info: As a field generated in the case of the BTP-B type, the destination port info may provide additional information when the destination port is the most well-known port. This field may have a size of 16 bits.
• The GeoNetworking packet includes a basic header and a common header according to the protocol of the network layer and selectively includes an extension header according to a GeoNetworking mode. The GeoNetworking header will be again described below.
• An LLC header is added to the GeoNetworking packet to generate an LLC packet. The LLC header provides a function of distinguishing and transmitting IP data and GeoNetworking data. The IP data and the GeoNetworking data may be distinguished by EtherType of SNAP. In an embodiment, when IP data is transmitted, the EtherType may be set to 0x86DD and included in the LLC header. In an embodiment, when GeoNetworking data is transmitted, the EtherType may be set to 0x86DC and included in the LLC header. A receiver may check the EtherType field of the LLC packet header and may forward and process the packet to the IP data path or the GeoNetworking path according to the value of the EtherType field of the LLC packet header.

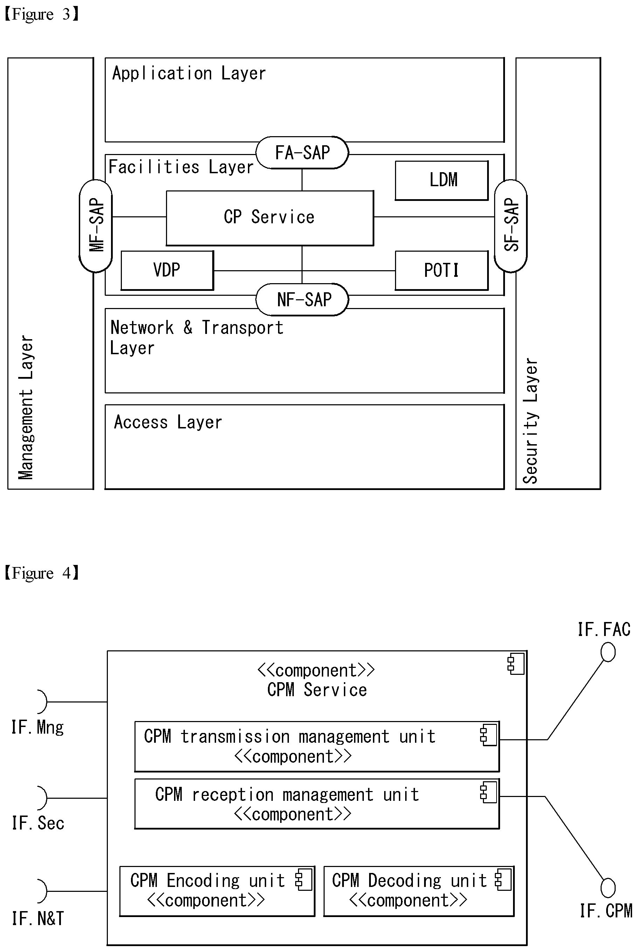

• FIG. 3 illustrates an architecture of a V2X communication device providing a CP service according to an embodiment of the disclosure.
• The V2X communication device may provide various services for traffic safety and efficiency. One of the services may be a cooperative awareness (CA) service. The cooperative awareness in road traffic means that road users and roadside infrastructures can know mutual positions, dynamics and attributes. Here, the road users may be all kinds of users on or near a road, which act as traffic safety and control, such as a vehicle, a truck, a motorcycle, a bicycle or a pedestrian, and the roadside infrastructures may be equipments including a road sign, a traffic light or a barrier, and an entrance.
• This awareness of each other becomes basics of several road safety and traffic efficiency applications. This can be performed by regular exchange of information between the road users at vehicle to vehicle (V2V), vehicle to infrastructure (V2I), infrastructure to vehicle (I2V) or everything to everything (X2X), etc. which are based on a wireless network called a V2X network.
• The cooperative safety and traffic efficiency applications require the V2X communication device to develop situational awareness that includes the presence and behavior of road users around the V2X communication device. For example, the V2X communication device may develop situational awareness through communication with its own sensors and other V2X communication devices. In this instance, the CA service may specify how the V2X communication device can inform its own position, dynamics and attributes by sending a cooperative awareness message (CAM).
• As above, in the CA service, the V2X communication device may periodically provide its own position and state to surrounding V2X communication devices, thereby supporting traffic safety. However, the CA service has a limitation in that only information of the corresponding V2X communication device itself can be shared. In order to overcome this limitation, it is necessary to develop services such as a CP service.
• The CP service may specify how the V2X communication device can inform other V2X communication devices about the position, dynamics, and attributes of surrounding road users and other objects that are detected. For example, the CP service may share this information with other V2X communication devices through the sending of collective perception messages (CPM). This CP service may be an optional facility for all types of V2X communication devices (vehicle V2X communication device, RSU V2X communication device, personal V2X communication device, etc.) participating in road traffic.
• Hereinafter, a CPM transmitted by a V2X communication device participating in a V2X network and a CP service for transmitting the CPM are described in detail with reference to FIG. 3. In the present disclosure, the CPM may be a message exchanged between V2X communication devices via a V2X network, and may be used to generate collective perception for road users and other objects detected and/or recognized by the V2X communication device. In this instance, the detected road user or object may be a road user or an object which is not equipped with a V2X communication device, but is not limited thereto.
• As described above, the V2X communication device sharing information through the CAM shares only information about the state recognition of the V2X communication device itself with other V2X communication devices in order to generate cooperative awareness. In this case, since the road user or other objects unequipped with the V2X communication device are not a part of the system, a view about safety and traffic management related situations is limited.
• One method for improving this is that a system that is equipped with the V2X communication device and is able to recognize road users and objects unequipped with the V2X communication device informs other V2X communication devices of the presence and state of road users and objects unequipped with a V2X device. In order to easily increase the safety and traffic management performance, the CP service recognizes the cooperative awareness of the presence of the road user and the object unequipped with the V2X device, and hence can easily increase the safety and traffic management performance of the system equipped with the V2X communication device.
• As shown in FIG. 3, the CP service may be a facilities layer entity that operates a CPM protocol. For example, the CP service may be a part of an application support domain of the facilities layer. FIG. 3 illustrates a logical interface for the CP service and other layers in the architecture of the V2X communication device and a potential logical interface for entities in the facilities layer.
• This CP service may provide two services, for example, sending and receiving of the CPM. The CP service may be fundamentally different from the CA service in that the CP service cannot receive input data about a host V2X communication device, for example, from a VDP or POTI unit.
• The sending of the CPM includes generation and transmission of the CPM. In a process for generating the CPM, an originating V2X communication device configures a CPM, and then the CPM is delivered to the networking and transport layer for dissemination. In the present disclosure, the originating V2X communication device may be referred to as a sending V2X communication device, a transmitting V2X communication device, a host V2X communication device, etc.
• In order to collect relevant information for the CPM generation and to deliver the received CPM content for additional processing, the CP service may interface with other entities in the facilities layer and V2X applications in the facilities layer. In an embodiment, at the V2X communication device, the entity for data collection may be a facility that provides object detection at a host object detector.
• Further, in order to disseminate (or send) the CPM, the CP service may use services provided by protocol entities of the networking and transport layer. For example, the CP service may interface with the networking and transport layer (N&T) through NF-SAP to exchange CPM messages with other V2X communication devices. In addition, the CP service may interface with the secure entities through SF-SAP to access the security service for CPM dissemination and CPM reception, may interface with the management entities through MF-SAP, and may interface with the application layer through FA-SAP if the received CPM data are directly provided to the application.
• The dissemination of the CPM may vary depending on the applied communication system. For example, in the ITS-G5 network (defined in ETSI EN 302 663), the CPM may be sent to all the V2X communication devices within a direct communication range by the originating V2X communication device. The communication range may be particularly affected by the originating V2X communication device by changing the transmission power according to a relevant region.
• Further, the CPM may be periodically generated at a rate that is controlled by the CP service in the originating V2X communication device. The generation frequency may be determined in consideration of a radio channel load determined by decentralized congestion control (DCC), and determined in consideration of the state of the detected non-V2X object, for example, dynamic behavior of position, speed or direction, and transmission of the CPM for the same (perceived) object by other V2X communication devices.
• Further, when the receiving V2X communication device receives the CPM, the CP service allows the contents of the CP to be able to be used in facilities within the receiving V2X communication device, such as a V2X application and/or a local dynamic map (LDM). For example, the local dynamic map (LDM) may be updated with the received CPM data. The V2X application may retrieve this information from the LDM for additional processing.
• FIG. 4 illustrates a function block diagram of a CP service according to an embodiment of the disclosure. More specifically, FIG. 4 illustrates a functional block of a CP service and a function block having interfaces for other facilities and layers according to an embodiment of the disclosure
• As shown in FIG. 4, the CP service may provide the following sub-functions for CPM transmission and reception.
• CPM encoding: This sub-function may configure or generate a CPM according to a predefined format. In this instance, the latest in-vehicle data may be included in the CPM.
• CPM decoding: This sub-function may decode the received CPM.
• CPM transmission management: This sub-function may implement a protocol operation of the originating V2X communication device. In particular, this may include activation and termination of the CPM transmission operation, determination of the CPM generation frequency, and trigger of the CPM generation.
• CP reception management: This sub-function may implement a protocol operation of the receiving V2X communication device. In particular, this may include triggering "CPM decoding" function in the CPM reception, providing the received CPM data to the LDM or the V2X application of the receiving V2X communication device, and checking information of the optionally received CPM.
• The CPM dissemination is described in detail below. Specifically, the requirements for CPM dissemination, CP service activation and termination, CPM trigger conditions, CPM generation cycle, constraints, etc. are described.
• In an embodiment, point-to-multipoint communication may be used for CPM transmission. For example, when ITS-G5 is used for CPM dissemination, a control channel (G5-CCH) may be used. In an embodiment, the CPM generation may be triggered and managed by the CP service while the CP service is being activated. For example, the CP service may be activated together with the activation of the V2X communication device and may be terminated when the V2X communication device is terminated.
• In an embodiment, the host V2X communication device may send a CPM whenever at least one object having a sufficient level of confidence that needs to be exchanged with the neighboring V2X communication device is detected. With regard to the inclusion of the detected object, the CP service should consider a trade-off between the object age and the channel utilization. For example, in terms of an application using information received by the CPM, updated information should be provided as frequently as possible. However, in terms of the ITS-G5 stack, the channel utilization should be minimized, and thus a low transmission cycle is required. Accordingly, considering this, the V2X communication device should appropriately include the detected object or object information in the CPM. In order to reduce a resulting message size, the object needs to be evaluated before transmission thereof.

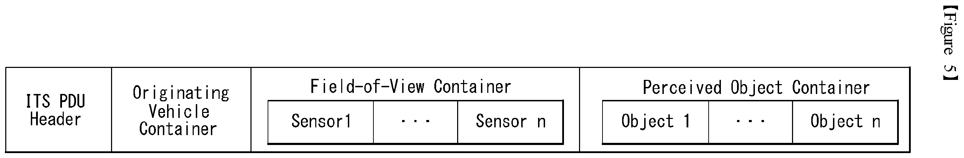

• FIG. 5 illustrates a CPM structure according to an embodiment of the disclosure. In an embodiment of FIG. 5, the CPM structure may be a basic CPM structure.
• As described above, the CPM may be a message exchanged between V2X communication devices in a V2X network and may be used to generate collective perception for road users and/or other objects detected and/or recognized by the V2X communication device. That is, the CPM may be an ITS message for generating the collective perception for an object detected by the V2X communication device.
• In an embodiment, the CPM may include state and attribute information of road users and objects detected by the originating V2X communication device. The content may vary depending on types of detected road users or objects and a detection performance of the originating V2X communication device. For example, in the case of a vehicle object, the state information may at least include information on an actual time, a position, and a motion state. Further, the attribute information may include attributes such as a dimension, a vehicle type, and a role within road traffic.
• The CPM may complement the CAM and act similarly to the CAM. That is, this may be to increase the cooperative awareness. The CPM may include externally observable information about the detected road user or object. The CP service may include a method of reducing replication or duplication of a CPM sent by a different V2X communication device by checking a CPM sent by another station.
• Upon the CPM reception, the receiving V2X communication device may recognize the presence, type and state of the road user or object that has been detected by the originating V2X communication device. The received information may be used by the receiving V2X communication device in order to support V2X applications for increasing safety and improving traffic efficiency and travel time. For example, by comparing the received information with the state of the detected road user or object, the receiving V2X communication device may estimate a risk of collision with the road user or object. Further, the receiving V2X communication device may inform a user through a human-machine interface (HMI) of the receiving V2X communication device, or may automatically take corrective actions.
• A basic structure/format of the CPM is described below with reference to FIG. 5. This CPM format may be presented as ASN. 1. Also, a data element (DE) and a data frame (DF) which are not defined in the present disclosure may be derived from the common data dictionary specified in ETSI TS 102 894-2.
• Referring to FIG. 5, the CPM may include an ITS protocol data unit (PDU) header and a plurality of containers.
• The ITS PDU header is a common header including information on a protocol version, a message type, and an ITS ID of the originating V2X communication device. The ITS PDU header is a common header used in the ITS message and exists in the starting part of the ITS message. The ITS PDU header may be referred to as a common header, a header, etc.
• The plurality of containers may include an originating vehicle container (OVC), a perceived (or detected) object container (POC), and/or a field-of-view container (FOC) (or may be referred to as a sensor information container (SIC)). For example, the CPM may include the OVC as a mandatory container and may optionally include the FoVC and the POC. Each container is described below with reference to Tables 1 to 3.
• Table 1 represents an exemplary OVC in the CPM.
•

**[Table 1]**

| | |
|---|---|
| DE | TS 102 894-2 [2] CDD reference |
| Generation Delta Time | See CAM ETSI EN 302 637-2 [3] |
| Reference Position | A.124 |
| Heading | A.112 |
| Longitudinal Speed | A.126 |
| Lateral Speed | A.126 |
| Vehicle Length | A.131 |
| Vehicle Width | A.95 |

• Specifically, Table 1 shows data elements (DEs) and/or data frames (DFs) included in the exemplary OVC. Here, the DE is a data type including single data. The DF is a data type that includes one or more elements in the predefined order. For example, the DF may be a data type that includes one or more DEs and/or one or more DFs in the predefined order.
• The DE/DF may be used to configure a facilities layer message or a V2X application layer message. Examples of the facilities layer message may include a CAM, a CPM, a DENM, and the like. In the present disclosure, these messages may be referred to as V2X messages or ITS messages.
• As shown in Table 1, the OVC includes basic information related to the V2X communication device that disseminates the CPM. The OVC may be interpreted as a scale-down version of the CAM, but may include only the DE required for a coordination transformation process. That is, although similar to the CAM, the OVC provides basic information about the originating V2X communication device. However, the included information focuses on supporting the coordinate transformation process.
• The OVC may provide the followings.
• - The latest geographic position of the originating V2X communication device obtained by the CP service upon the CPM generation
• - The lateral and longitudinal absolute velocity components of the originating V2X communication device
• - Geometric dimensions of the originating V2X communication device
• Each piece of information (DE or DF) is described below with reference to Table 1.
• Generation delta time: as the DE, indicates time corresponding to time of a reference position in the CPM. This may be considered as time of the CPM generation. In the present disclosure, the generation delta time may be referred to as a generation time.
• Reference position: as the DF, indicates a geographic position of the V2X communication device. This indicates a geographic point position. In an embodiment, the reference position includes information about a latitude, a longitude, a position confidence and/or an altitude. Here, the latitude represents a latitude of the geographic point, and the longitude represents a longitude of the geographic point. Further, the position confidence represents the accuracy of the geographic position, and the altitude represents an altitude and altitude accuracy of the geographic point.
• Heading: as the DF, indicates an orientation in a coordinate system. In an embodiment, the heading includes information about heading value and/or heading confidence. Here, the heading value indicates a traveling direction based on the north, and the heading confidence indicates accuracy of a reported heading value having a predefined confidence level.
• Longitudinal speed: as the DF, may describe a longitudinal speed and accuracy of speed information about a moving object (e.g., a vehicle). In an embodiment, the longitudinal speed includes information on speed values and/or speed accuracy. Here, the speed value represents a speed value in the longitudinal direction, and the speed accuracy represents accuracy of the reported speed value.
• Lateral speed: as the DF, may describe a lateral speed and accuracy of speed information about a moving object (e.g., a vehicle). In an embodiment, the lateral speed includes information on speed values and/or speed accuracy. Here, the speed value represents a speed value in the lateral direction, and the speed accuracy represents accuracy of the reported speed value.
• Vehicle length: as the DF, represents a vehicle length and an accuracy indication. In an embodiment, the vehicle length includes information about a vehicle length value and/or a vehicle length accuracy indication. Here, the vehicle length represents a length of the vehicle, and the vehicle length accuracy indication represents an indication of reported length value confidence.
• Vehicle width: as the DE, indicates a width of the vehicle. For example, the vehicle width may represent the width of the vehicle including side mirrors. For example, when the vehicle width is equal to or greater than 6.1 meters, the value has to be set to 61. If this information is not available, the value has to be set to 62.
• Table 2 shows an exemplary FOC (or SIC) in the CPM.
•

**[Table 2]**

| DE | SI-Unit | Description |
|---|---|---|
| Sensor ID | - | Unique ID of sensor which is used to identify by which sensor an object has been perceived. The ID is a random number generated when the ITS-S is activated and never changes until the ITS-S is deactivated. |
| Sensor Type | - | Enumeration of sensor types: undefined (0), radar (1), lidar (2), monovideo (3), stereovision (4), nightvision (5), ultrasonic (6), fusedObject (7), pmd(8) |
| Sensor Position | | |
| Position X | m | Mounting position of the sensor in negative x-direction according to the ISO 8855 [i. 15] reference frame, measured from the ETSI reference position (see Clause B. 19 in EN 302 637-2 [3]) |
| Position Y | m | Mounting position of the sensor in y-direction according to the ISO 8855 [i. 15] reference frame, measured from the ETSI reference position (see Clause B.19 in EN 302 637-2 [3]) |
| Radius | m | Average perception range of the sensor as defined by the manufacturer |
| Opening Angle | | |
| Begin Angle | deg | Start angle of the sensor frustum in ISO 8855 [i.15] coordinate system |
| End Angle | deg | End angle of the sensor frustum in ISO 8855 [i.15] coordinate system |
| Quality Class | - | Classification of sensor defining the quality of measured objects |

• The FOC provides a description of at least one sensor mounted on the originating V2X communication device. When the V2X communication device is equipped with a multi-sensor, the description may be added several times. For example, the FOC provides information about sensor capabilities of the originating V2X communication device. To this end, generic sensor characteristics which provide a mounting position of a sensor on the disseminating V2X communication device as well as a sensor type and a range and an opening angle of the sensor (i.e., frustum of the sensor) may be included as a part of the message. This information may be used by the receiving V2X communication device to select an appropriate prediction model according to a performance of the sensor.
• Each piece of information (DE or DF) is described below with reference to Table 2.
• Sensor ID: This indicates a unique ID of a sensor used to identify a sensor by which an object has been perceived (or detected). That is, the sensor ID indicates a unique ID of a sensor that detects the object. In an embodiment, the sensor ID is a random number generated when the V2X communication device is activated, and may never change until the V2X communication device is deactivated.
• Sensor type: This indicates a type of sensor. That is, the sensor type is enumerated. For example, the sensor type may be undefined (0), radar (1), lidar (2), monovideo (3), stereovision (4), nightvision (5), ultrasonic (6), fusedObject (7), or pmd(8).
• Sensor position: Position X indicates a mounting position of the sensor in the negative x-direction, and position Y indicates a mounting position of the sensor in the y-direction.
• Radius: This indicates an average perception range of the sensor as defined by the manufacturer.
• Opening angle: a begin angle indicates a start angle of the sensor frustum, and an end angle indicates an end angle of the sensor frustum.
• Quality Class: This represents classification of the sensors that define the quality of the measured objects.
• Table 3 shows an exemplary POC in the CPM.
•

**[Table 3]**

| DE | TS 102 894-2 [2] CDD reference | Mandatory | Description |
|---|---|---|---|
| Time of Measurement | | Yes | Time in micro-seconds from the message reference time. Defines the relative age of the measured object. |
| Object ID | | Yes | Unique random ID assigned to object. This ID is maintained (i.e. does not change) as long as the object is tracked (i.e. considered by the disseminating ITS-S's data fusion processes). |
| Sensor ID | | Yes | Corresponds to the Sensor ID DE in Table 4. This DE is used to relate the object information to the sensor providing the measurement. |
| Longitudinal Distance | | Yes | |
| Distance Value | | Yes | Relative x-distance to object in originator reference frame ISO 8855 [i.15] |
| Distance Confidence | | Yes | Confidence of relative x-distance to object in originator reference frame ISO 8855 [i.15] |
| Lateral Distance | | Yes | |
| Distance Value | | Yes | Relative y-distance to object in originator reference frame ISO 8855 [i.15] |
| Distance Confidence | | Yes | Confidence of relative y-distance to object in originator reference frame ISO 8855 [i.15] |
| Longitudinal Speed | A.126 | Yes | Longitudinal speed of detected object along with confidence as described in CDD |
| Lateral Speed | A.126 | Yes | Lateral speed of detected object along with confidence as described in CDD |
| Object Heading | A.112 | No | Absolute orientation of object in WGS84 reference frame, if provided by data fusion process |
| Object Length | | No | |
| Length Value | | No | Measured length of the object |
| Length Confidence | | No | Confidence of measured length of the object |
| Object Width | | No | |
| Width Value | | No | Measured width of the object |
| Width Confidence | | No | Confidence of measured width of the object |
| Object Type | A.78 | No | Classification of object, if provided by data fusion process |

• The POC is used to describe an object perceived by the sensor in terms of the transmitting V2X communication device. Upon reception of the POC, the receiving V2X communication device may perform the coordinate transformation process with the help of the OVC to convert a position of the object into a reference frame of a receiving vehicle. In order to reduce the message size, several optional DEs may be provided, which may be used when the originating V2X communication device can provide the DE.
• The POC may be configured with selection of DEs to provide an abstract description of the perceived (or detected) object. For example, relative distance and velocity information and timing information about the perceived object related to the originating V2X communication device may be included in the POC as a mandatory DE. In addition, when the sensor of the originating V2X communication device can provide requested data, additional optional DEs may be provided.
• Each piece of information (DE or DF) is described below with reference to Table 3.
• Measurement time: This indicates time in microseconds from a message reference time. This may define a relative age of the measured object.
• Object ID: This indicates a unique random ID assigned to an object. This ID is maintained (i.e., is not changed) as long as the object is tracked (i.e., as long as considered by data fusion processes of the disseminating V2X communication device).
• Sensor ID: This is an ID corresponding to the sensor ID DE in Table 2. This DE may be used to relate object information to a sensor providing the measurement.
• Longitudinal distance: A distance value indicates a relative x-distance to the object in an originator reference frame, and distance confidence: this indicates a confidence of a relative x-distance to the object in the originator reference frame.
• Lateral distance: A distance value indicates a relative x-distance to the object in the originator reference frame, and distance confidence: this indicates a confidence of the relative x-distance to the object in the originator reference frame.
• Longitudinal speed: This indicates a longitudinal speed of the detected object according to the confidence.
• Lateral speed: This indicates a lateral speed of the detected object according to the confidence.
• Object heading: This indicates an absolute orientation of the object in the reference frame, if provided by the data fusion process.
• Object length: A length value indicates a measured length of the object, and length confidence: this indicates a confidence of the measured length of the object.
• Object width: A width value indicates a measured width of the object, and width confidence: this indicates a confidence of the measured width of the object.
• Obj ect type: this represents the classification of the object, if provided by the data fusion process.

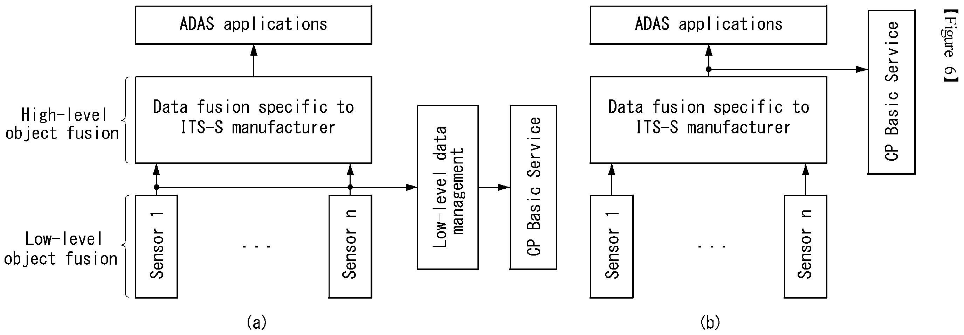

• FIG. 6 illustrates a method of extracting sensor data by a V2X communication device providing a CP service according to an embodiment of the disclosure. More specifically, FIG. 6(a) illustrates how the V2X communication device extracts sensor data at a low level, and FIG. 6(b) illustrates how the V2X communication device extracts sensor data at a high level.
• A source of sensor data to be transmitted as a part of any CPM needs to be selected according to requirements of a prospective data fusion process on the receiving V2X communication device. In general, the transmitted data should be as close as possible to original sensor data. However, simply transmitting the original sensor data, for example, raw data is not a viable solution. Because this imposes very high requirements in regard to a data rate and a transmission cycle. FIGS. 6(a) and 6(b) illustrate possible implementations for selecting data to be transmitted as a part of the CPM.
• In an embodiment of FIG. 6(a), sensor data is obtained from different sensors and is processed as a part of a low-level data management entity. This entity may select object data to be inserted as a part of a next CPM, and also calculate the plausibility of the detected object. In FIG. 6(a), because data of each sensor is transmitted, an amount of data transmitted through the V2X network increases, but there is an advantage in that sensor information can be efficiently utilized in the receiving V2X communication device.
• In an embodiment of FIG. 6(b), sensor data or object data provided by a data fusion process specific to the V2X communication device manufacturer are transmitted as a part of the CPM. In FIG. 6(b), because integrated sensor data collected into one via a data fusion block is transmitted, there is an advantage in that a small amount of data is transmitted through the V2X network. However, there is a disadvantage that it is dependent on the collection method of the V2X communication device collecting the sensor information. In this case, because different data fusion processes can be implemented by different manufacturers, this implementation method is not generally preferred to FIG. 6(a).
• Each time the object is detected by the sensor of the V2X communication device regardless of the implementation type, the plausibility thereof needs to be calculated. When the plausibility of the object exceeds a given threshold PLAUS_OBJ, the transmission should be considered. For example, when an absolute difference between a current yaw angle of the detected object and a yaw angle included in the CPM that has been previously sent by the originating V2X communication device exceeds 4 °, when a difference between a relative distance of current positions of the originating V2X communication device and the detected object and a relative position between the originating V2X communication device and the detected object included in the CPM that has been previously sent by the originating V2X communication device exceeds 4 meters, or when an absolute difference between a current velocity of the detected object and a velocity included in the CPM that has been previously sent by an originating object exceeds 0.5 m/s, the transmission may be considered.
- The CAM is a technology in which a vehicle provided with a V2X module periodically transmits its position and state to a surrounding V2X vehicle to help more stable driving. However, the existing CAM had a limitation of sharing only information of its own vehicle, and thus a collective perception service (CPS) technology is being discussed to complement this. Because vehicles equipped with an ADAS technology are constantly increasing, many vehicles are equipped with sensors such as camera, radar, Lidar, etc. to recognize many surrounding vehicles and perform a driving driver assistance function. The CPS technology is a technology that informs the surroundings of sensor data recognizing a surrounding environment through V2X communication in an ADAS.
- The present disclosure proposes an effective managing method of the CPS technology transmitting information of the surrounding vehicle and a communication algorithm suitable for a V2X communication environment, in order to complement the CAM message transmitting only information of its own vehicle.

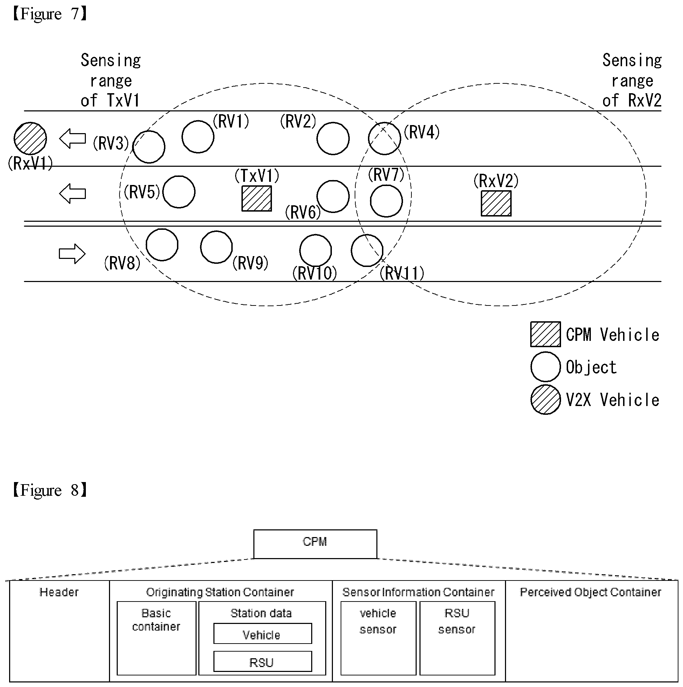

- FIG. 7 illustrates a CP service as an embodiment to which the present disclosure is applicable.
- Referring to FIG. 7, it is assumed that each of TxV1 and RxV2 vehicles is equipped with at least one sensor and has a sensing range shown by the dotted line.
- The TxV1 vehicle having a CPS function may recognize RV1 to RV11 vehicles, that are surrounding objects belonging to the sensing range, using several ADAS sensors mounted on the TxV1 vehicle. Object information obtained as described above may be delivered to surrounding vehicles equipped with a V2X receiver through the V2X communication. For example, an RxV1 vehicle not having the sensor among the surrounding vehicles receiving a CPS message can obtain information of the vehicles that follow, and an RxV2 vehicle equipped with the sensor can also obtain information of an object that is out of a sensing range of the RxV2 vehicle or is positioned at a blind spot.
- As illustrated in FIG. 3 above, to this end, the facilities layer can provide the above-described CP service. That is, the CP service may be performed in the facilities layer and may use the services that internally exist in the facilities layer. Here, a local dynamic map (LDM) is a service providing a map and may provide map information for the CP service. A position and time (POTI) is a service providing a position of the vehicle and time and may provide a position of its own vehicle and exact time using the corresponding information. A vehicle data provider (VDP) is a service providing information about the vehicle and may transmit by loading information, such as the size of its own vehicle, on the CPM using this.
- The ADAS vehicles are equipped with various sensors, such as a camera, an infrared sensor, radar, and Lidar, for the purpose of a driver driving assistance. The respective sensors may individually recognize an object, and object information recognized thus may be collected and fused by a data fusion block and may be provided to an ADAS application. Referring again to FIG. 6 above, for the CP service, a method of collecting (or fusing) sensor information in the existing ADAS technology is described.
- An existing sensor for ADAS or an existing sensor for CPS may always track surrounding objects and collect relevant data. In this case, when sensor values for CPS service are used, sensor information may be collected using two methods. Referring to FIG. 6(a), the respective sensor values may be individually provided to the surrounding vehicles through the CP service. As illustrated in FIG. 6(a), because information is transmitted for each sensor, an amount of data transmitted through the V2X increases, but there is an advantage in that a receiving system can efficiently utilize each piece of sensor information. Referring to FIG. 6(b), integrated sensor information collected into one after the data fusion block may be provided to the CP service. In such a case, there is an advantage in that a size of the CPM message sent through the V2X decreases, but there is a disadvantage that it is dependent on a collection method of the vehicle collecting sensor information.

- FIG. 8 illustrates a structure of a CPM message according to an embodiment to which the present disclosure is applied.
- Referring to FIG. 8, a CPM message may include header, originating station container (OSC), sensor information container (SIC), and perceived object container (POC) fields (or data, information, containers).
- The header may include 'protocolVersion', 'messageID', 'stationID' and/or `generationDeltaTime' fields. The respective fields represent, in turn, a version of protocol, an ID for distinguishing messages, an ID for distinguishing stations, and time at which the messages are generated.
- The OSC field used to transmit information of its own vehicle may include `BasicContainer' field and/or `StationData' field. The stations may be roughly distinguished into a vehicle and a road side unit (RSU), and 'StationData' field suitable for this may exist. Commonly needed originating station information may be included in the 'BasicContainer' field. The `BasicContainer' field of the OSC may include 'referencePosition' field representing a reference position of the vehicle transmitting the CPM and 'stationType' field representing a station type (e.g., vehicle, RSU). The 'StationData' field of the OSC may be defined differently depending on the station type. If the station is the vehicle, the 'StationData' field may include 'OrignatingVehicleContainer' field, and the `OrignatingVehicleContainer' field may include `Heading', 'Speed', 'OrientationDeltaAngle', 'driveDirection', 'Acceleration' and/or `trailerData' fields (or data, information, containers). The respective fields may represent, in turn, a vehicle's driving direction, a vehicle's driving speed, an angle between the vehicle's driving direction and the vehicle's front, a vehicle's acceleration, and trailer information. If the station is the RSU, the 'StationData' field may include 'intersectionReferenceID' field and/or 'RoadSegmentationID' field, and the respective fields may represent an intersection identification ID and a road ID.
- The SIC represents a container used to deliver installation/function information of the sensor used to detect the object. The SIC may include a vehicle sensor field or an RSU sensor field depending on the station type. The vehicle sensor field may include SensorID representing an ID of the sensor, SensorType representing a type of the sensor, offset data (represented by offset based on xOffset, yOffset, zOffset, and referencePosition) representing a position of the sensor, and/or data representing a measuring range (range, horizontalFrustumStart/End, verticalFrustumStart/End, measuring distance, horizontal measuring range, vertical measuring range) of the sensor. The RSU sensor field may include SensorID representing an ID of the sensor, offset information (represented by offset based on xOffset, yOffset, zOffset, and referencePosition) representing a position of the sensor, and/or data representing a measuring range (range, horizontalFrustumStart/End, verticalFrustumStart/End, measuring distance, horizontal measuring range, vertical measuring range) of the sensor.
- The POC is a container that contains information of surrounding objects collected through the sensors. `ObjectData' field including each object information is generated according to the number of measured objects. For example, if four objects are measured, four object data may be included in the POC field.
- The object data may include 'ObjectID' representing an ID of the object, data 'SensorID' and 'TimeOfMeasurement' representing a sensor and time used in the measurement, position information ('xDistance', 'yDistance', `zDistance'; representing x-distance, y-distance, and zdistance at 'referencePosition') of the measured object, motion information (`xSpeed', `ySpeed', `zSpeed', `xAcceleration', `yAcceleration', `zAcceleration'; representing speed and acceleration at x-axis, y-axis, and z-axis) of the object, size information ('planarObjectDimension1', 'planarObjectDimension1', 'verticalObjectDimension'; informing size and height values of the horizontal plane that the object has) of the object, and/or state information (` classification', `lanePosition', 'intersectionTopologyPositoin'; vehicle type of the object, lane information of the object, and intersection position information of the object) of the object.

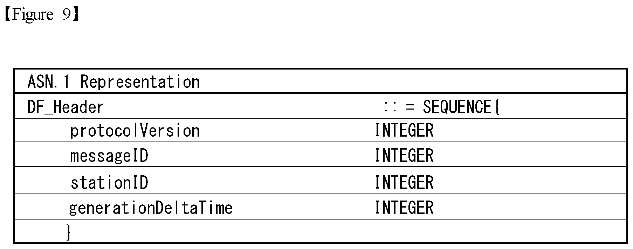

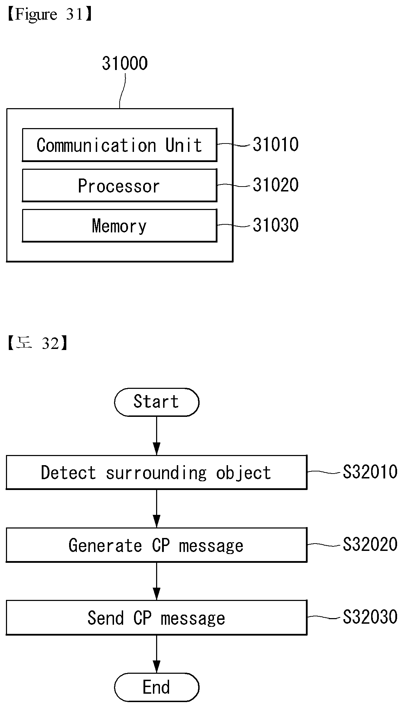

- FIG. 9 illustrates a header data format of a CPM message according to an embodiment of the disclosure.
- Referring to FIG. 9, a header is a data frame showing configuration and type of a message, and a header according to a related art CPM message structure may include 'protocolVersion', 'messageID', 'stationID' and/or 'generationDeltaTime' fields. The respective fields represents, in turn, a version of protocol, an ID for distinguishing messages, an ID for distinguishing stations, and time at which the messages are generated.
- That is, according to the related art CPM message structure, the header includes ITS_PDU_Header field and a generation delta time field. In such a case, because the CPM has no commonality with the existing CAM and DENM, there is a problem that it may cause confusion in implementation.
- Further, the existing OSC field is described by distinguishing station data depending on a type of the ITS station (e.g., vehicle or RSU), and hence common data exists in a basic container. However, according to the related art CPM message structure, the type of the ITS station, for example, StationType identifying whether the ITS station is the vehicle or the RSU is positioned in the basic container of the OSC field. Because the StationType is necessary information when using data of the SIC field as well as the OSC field, the presence of the higher level can improve data efficiency.
- Accordingly, the present disclosure proposes a method of reconfiguring the related art CPM message, in order to solve the above-described problem and increase data efficiency. This method is described with reference to the following figures.

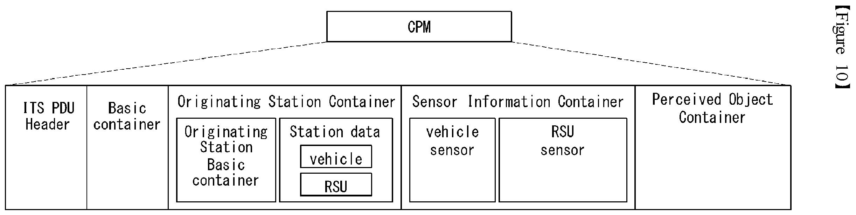

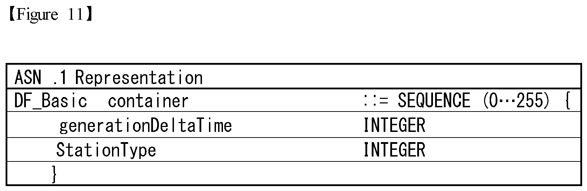

- FIGS. 10 and 11 illustrate a structure and a header data format of a CPM message according to an embodiment of the disclosure.
- Referring to FIG. 10, in an embodiment of the disclosure, a related art header field of the CPM message may include ITS_PDU_header field and a basic container field. That is, the related art header field of the CPM message may be divided into the ITS_PDU_header field and the basic container field.
- The embodiment of the disclosure can share a data format with the existing CAM and DENM through the ITS_PDU_header field, and can obtain commonly needed information through the basic container field when analyzing data of the OSC field and the SIC field.
- Further, in an embodiment, the basic container field existing in the OSC field of the related art CPM message may be renamed as an originating station basic container.
- Referring to FIG. 11, a basic container may include a generationDeltaTime field (or parameter, data element) and/or a StationType field (or parameter, data element). In the present disclosure, the basic container represents a higher field (or data, data format, data frame) including the generationDeltaTime field and/or the StationType field, and it goes without saying that its name is not limited.

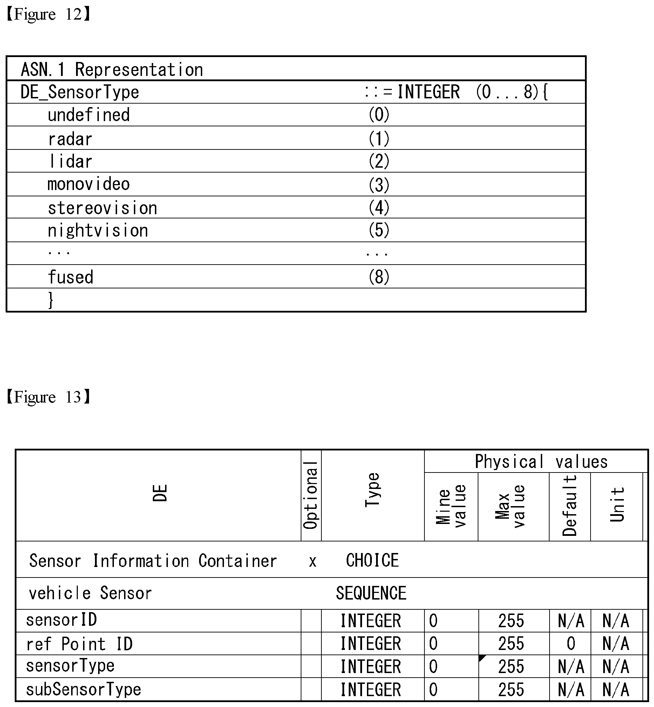

- FIG. 12 illustrates a sensor type data element included in an existing CPM message.
- Specifically, FIG. 12 illustrates a data format of a sensor type included in the existing CPM message. A V2X vehicle providing a CP service measures a surrounding situation using a sensor existing in its own vehicle, and then informs the surrounding of information about a state of the object. To this end, the V2X vehicle also informs the surrounding vehicles of information of the sensor used to grasp the state of the surrounding object.
- In this instance, the existing CPM message includes a SensorType field illustrated in FIG. 12, in order to show sensor information used to detect the above-described surrounding object. The sensor type is expressed by up to eight types. If the sensor type is unknown, the sensor type may be set to undefined(0). Types of other sensors that have been currently used, for example, radar, lidar, vision, and ultrasound sensors may be defined as illustrated in FIG. 12. If several sensors are combined, the sensor type may be set to fused(8).
- In an embodiment of the disclosure, the above-described SensorType field may be included in a basic container in an OSC field in the same manner as the existing CPM message, and may be included in the basic container field illustrated in FIGS. 10 and 11.
- In the existing CPM message, the SensorType is defined using only the sensor types that currently exist. However, as the technology has developed, various sensors are being developed, and more various sensor expressions are needed. Because the same type of sensor can have several methods and several types, detailed expressions are required.
- FIG. 13 illustrates a sensor type data element according to an embodiment of the disclosure.
- Referring to FIG. 13, for the purpose of various sensor expressions, a size of the `SensorType' field may increase from the existing 8 to 255. Afterwards, it is possible to add a sensor type. The CPM message may include a 'SubSensorType' field representing a sensor type, in order to show the features of the sensors that may be different even in the same sensor type. Hence, even if there are the same type of sensors, features that may be different in the measurement method and the manufacturer are expressed through the 'SubSensorType' field.
- In the embodiment of the disclosure, the SensorType field and the SubSensorType field described above may be included in a basic container in an OSC field in the same manner as the existing CPM message, and may be included in the basic container field illustrated in FIGS. 10 and 11.

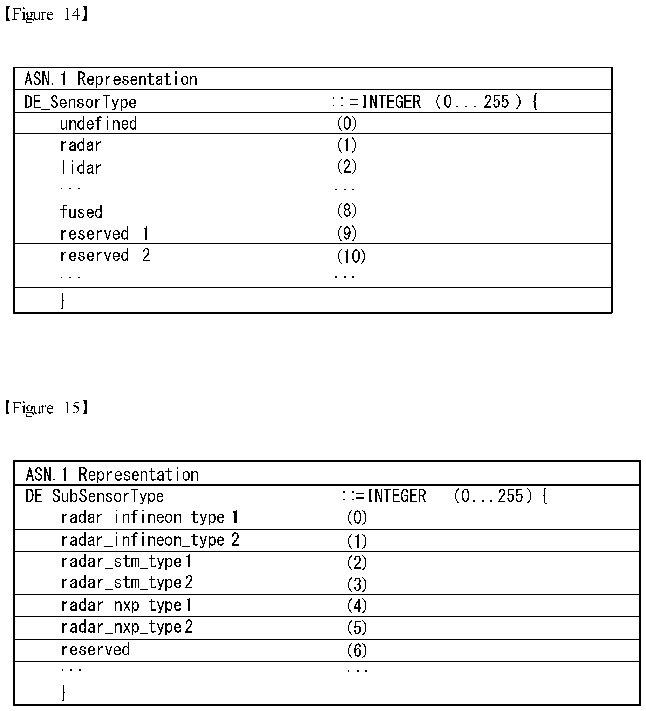

- FIGS. 14 and 15 illustrate a sensor type data element format according to an embodiment of the disclosure.
- Referring to FIG. 14, as described above, a size of the SensorType field may increase from the existing 8 to 255. The SensorType field includes sensor types included in the SensorType field of the existing CP message and may further include additional sensor types. In an embodiment, as the technology of the SensorType field according to the present disclosure has developed, the SensorType field may include spare fields for newly created sensor types.
- Further, as described above, the CPM message includes a SubSensorType field representing a sensor type, in order to show the features of the sensors that are different even in the same sensor type, and the corresponding field has a data format illustrated in FIG. 15. The SubSensorType field is determined depending on the SensorType field.
- That is, in the embodiment of the disclosure, it is possible to express in detail the sensor used to detect the object using the SubSensorType field. When the SubSensorType field (or information) is used, the receiver can grasp the precision/reliability of the sensor using the corresponding information, and thus can more accurately determine a state of the object received through the sensor.
- Referring to FIG. 15, it is assumed that the SensorType is configured as a radar. For example, the SubSensorType field may include information about the manufacturer and/or the manufacturing method of the radar sensor. For example, a sensor using a first type of technology manufactured by Infineon Inc. may be set to (0), and a radar sensor using a second type of technology manufactured by Nxp Inc. may be set to (5).
- The above-described SubSensorType method is merely an example and is not limited to an integer type. The SubSensorType may include supplementary information for the SensorType using various methods such as a string.

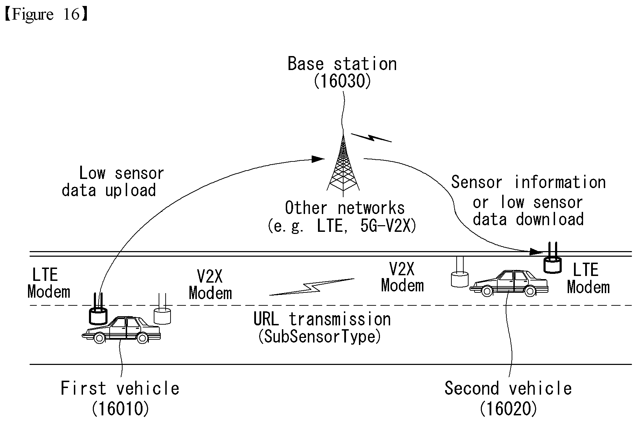

- FIG. 16 illustrates a method of transmitting sensor information according to an embodiment of the disclosure.
- Referring to FIG. 16, in an embodiment of the disclosure, the sensor type field and/or the sub-sensor type field described above with reference to FIGS. 13 to 15 may include a URL value. In other words, the V2X vehicle may deliver additional sensor information by sending the URL value through the SubSensorType field.
- For example, when a first vehicle 16010 is equipped with a new sensor or a performance of its sensor is updated, the first vehicle 16010 may send a URL address so that a surrounding vehicle can obtain information of the related sensor.
- In another embodiment, the first vehicle 16010 can inform more elaborately the surrounding vehicle of sensor information and object detection information by uploading raw sensor data to a base station. The first vehicle 16010 may upload raw sensor data to a base station (or server) 16030 and send a URL value capable of accessing the raw sensor data to the surrounding vehicle (e.g., a second vehicle 16020). Hence, a receiver (e.g., the second vehicle 16020) can obtain the URL value from the received CPM message and access the corresponding URL to obtain additional information of the sensor, thereby utilizing it in the safe driving.

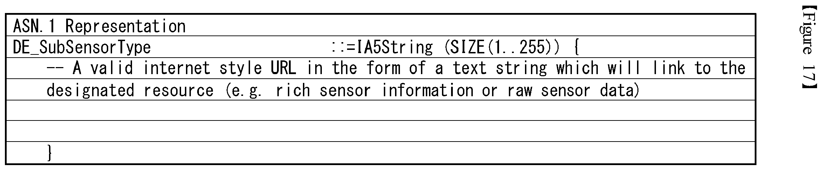

- FIG. 17 illustrates sensor type data including URL information according to an embodiment of the disclosure.
- In an embodiment of the disclosure, the sensor type field and/or the sub-sensor type field described above with reference to FIGS. 13 to 15 may include a URL value. Referring to FIG. 17, it is assumed that the sub-sensor type field includes URL information.
- Referring to FIG. 17, the SubSensorType field may include a URL value. In this instance, the SubSensorType field may be defined as IA5String and may have a size of up to 255.

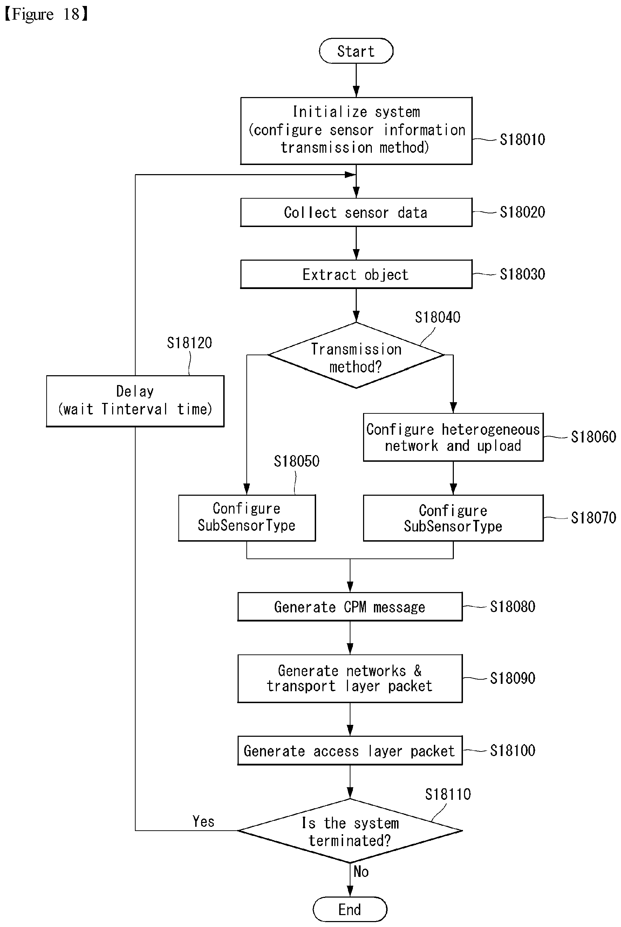

- FIG. 18 is a flow chart illustrating a method of generating a CPM message according to an embodiment of the disclosure.
- Referring to FIG. 18, when a CPS service providing system starts, a V2X vehicle (or a V2X communication device) initializes the system in S18010.
- The V2X vehicle processes (or collects) sensors received through the sensing in an initialized sensor module in S18020, and obtains (or extracts, detects) information of surrounding objects in S18030.
- The V2X vehicle may configure a method of using the sub-sensor type before generating a CPM message in S18040.
- For example, when stand alone is used as the sub-sensor type, the V2X vehicle may set an index for detailed information of a sensor used, in S18050. In order to obtain/configure information on sensor type and/or the sub-sensor type, the V2X vehicle may apply the method described in FIGS. 10 to 15 above.
- If a method of transmitting information on the sensor over a heterogeneous network is used, the V2X vehicle may configure the heterogeneous network for transmitting information on the sensor and upload rich sensor information or raw sensor data in S18060. Afterwards, the V2X vehicle may set a URL value included in a CPS message through a sensor type field and/or a sub-sensor type field in S18070. In this instance, the method described in FIGS. 16 and 17 above may be applied.
- Next, the V2X vehicle generates the CPM message in S18080. The CPM message may include sensor coverage information generated in the above-described step. The CPM message generated in the step S18080 may be generated as a packet while passing through the networks and transport layer and the access layer in S18090 and S18100, and may be sent wirelessly. Afterwards, if the system is not terminated, the V2X vehicle may periodically provide the CPS service by obtaining the sensor information again.
- The method of generating the CPM message described above is merely an example, and some of the above-described steps may be omitted, and other steps may be added.

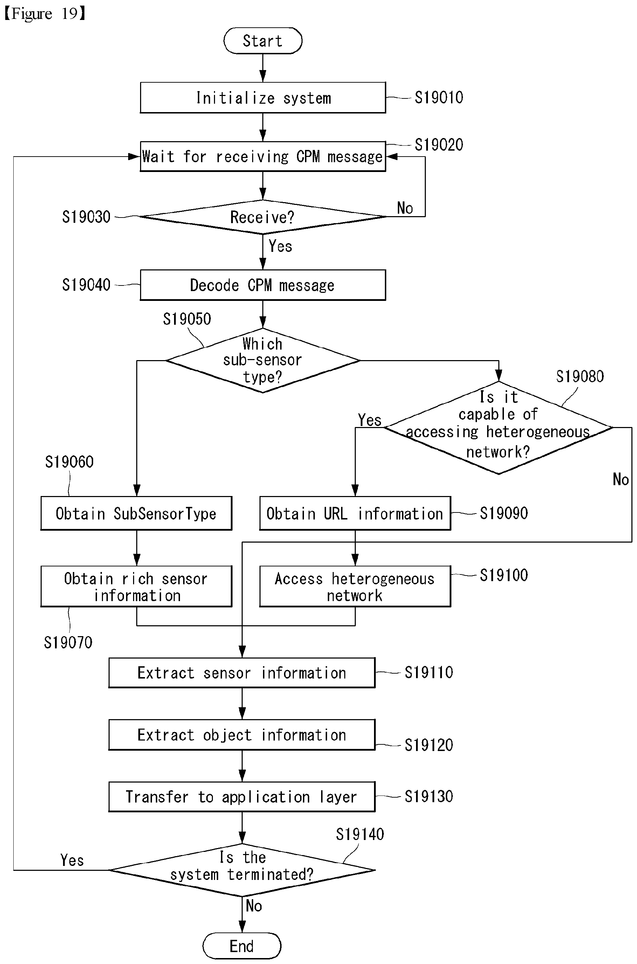

- FIG. 19 is a flow chart illustrating a method of decoding a CPM message according to an embodiment to which the present disclosure is applied.
- Referring to FIG. 19, when the system starts, the V2X vehicle performs the initialization of the system in S19010. A receiving device may prepare to start a communication module with a V2X system through the initialization of the system.
- The V2X vehicle waits for receiving the CPM message through a connected V2X communication modem in S19020. When a V2X receiver receives a V2X signal, i.e., the CPM message in S19030, the input signal passes through the access layer and the networks and transport layer and receives data via the NF-SAP, and the decoding of the CPM message is performed in the facilities layer in S19040.
- In an embodiment, the V2X vehicle may determine whether the sub-sensor type included in the received CPM message represents a stand alone type or a URL type, in S19050.
- As described above with reference to FIGS. 10 to 15, if the stand alone type is used, the sub-sensor type field included in the CPM message may have an index value indicating detailed information about a predefined sensor type. Thus, the V2X vehicle may obtain a sub-sensor type value in S19060 and obtain detailed information about the sensor in a predefined database using it in S 19070.
- If the V2X vehicle receives the sub-sensor type of the URL type, the V2X vehicle checks to support the heterogeneous network capable of accessing the URL in S19080. If there is no device (or modem) supporting the heterogeneous network, the V2X vehicle may ignore the corresponding URL. If the V2X vehicle is able to access the URL, the V2X vehicle obtains a URL value in the sub-sensor type field in S19090. Afterwards, the V2X vehicle may access the heterogeneous network using it and obtain rich sensor information or raw sensor data in S19100.
- Next, the V2X vehicle may extract sensor information and object information based on information calculated through the above-described two paths in S19110 and S19120. The extracted information is transferred to the application layer in S19130, and the CPS service may be provided based on this.
- The method of decoding the CPM message described above is merely an example, and some of the above-described steps may be omitted, and other steps may be added.

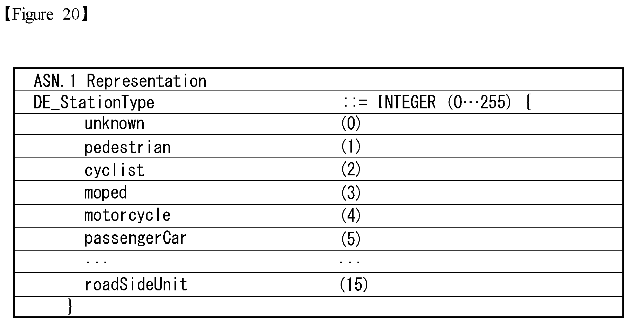

- FIG. 20 illustrates a format of object classification data according to an embodiment of the disclosure.
- The V2X vehicle providing a CP service measures a surrounding situation using sensors existing in its own vehicle, and then informs a surrounding vehicle of state information of detected objects. In this instance, the V2X vehicle sends the CPM message by including classification data in the CPM message in order to classify types of the sensed objects.
- Referring to FIG. 20, the above-described classification data may use a data type (or data element) of a `stationType' field representing types of an existing ITS station. However, the present disclosure is not limited to its name. In another embodiment, the classification data may consist of a classification field.
- The stationType data element may include fields (or data, parameters) such as `pedestrian', 'bicycle', 'car', 'bus', 'truck', 'tram', and `roadside unit' representing the types of the ITS station.
- When the stationType field is used to express information on the classification of the detected objects as in the existing method, only units of the ITS are represented. In the CPS, there emerges the necessity of informing a state of surrounding vehicles, that are driving around a vehicle, through sensors of its own vehicle, and also transmitting information about objects, that are undefined in the ITS station type, such as a load that has fallen off the vehicle, carcasses of animals due to road kills, etc., and parked vehicles. To this end, the present disclosure proposes a new data element to express more accurately the classification of the objects.

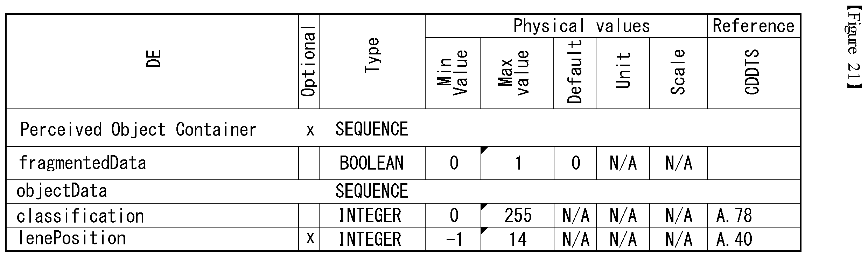

- FIG. 21 illustrates a structure of object data according to an embodiment of the disclosure.
- Referring to FIG. 21, a CPM message may include a POC field (or container) including information on a detected object. Object data representing the information on the detected object may include a classification field (or parameter, data element) and/or a lane position field (or parameter, data element). Each field is described in detail below.

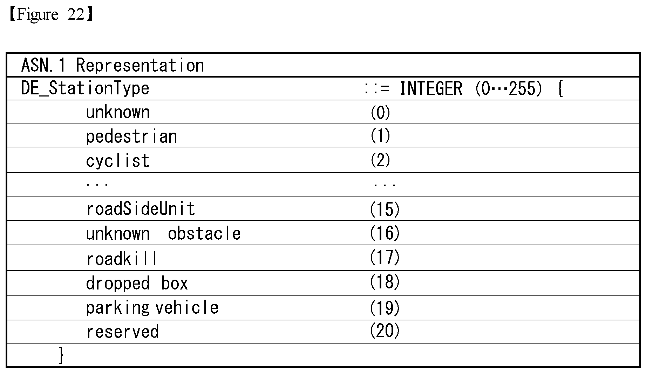

- FIG. 22 illustrates a format of object classification data according to an embodiment of the disclosure.
- Referring to FIG. 22, in an embodiment of the disclosure, a new data element including object classification information may include more information than the existing one. In the embodiment, a StatoinType (or classification, ObjectType) field may consist of integer and may have values of 0 to 255. The StatoinType field according to an embodiment of the disclosure may further include information about possible obstacles due to road conditions, such as unknown obstacle(16), roadkill(17), dropped box(18), and parking vehicle(19), in addition to information included in the existing StatoinType field.

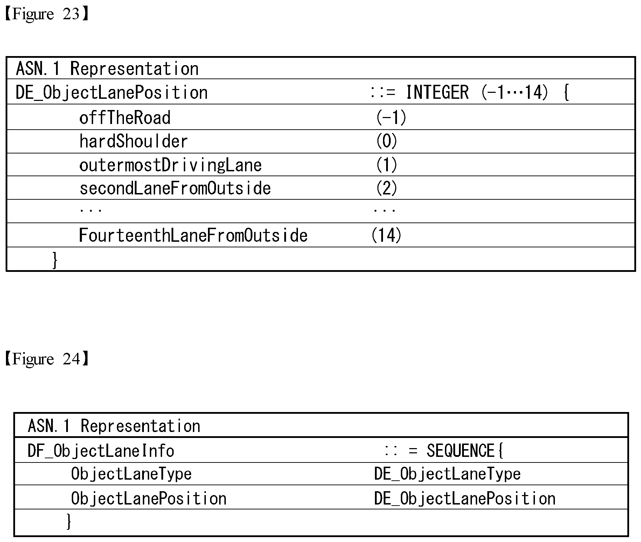

- FIG. 23 illustrates a data format of object lane information according to an embodiment of the disclosure.
- Referring to FIG. 23, in the related art CP service, the V2X vehicle sending the CPM message measures a surrounding situation using sensors existing in its own vehicle, and then informs surrounding vehicles of state information of detected obj ects. In this instance, the V2X vehicle may inform values such as speed and position of the object, and also inform lane information occupied through a lane position field to easily grasp the state of the object. In order to express this, 'DE_LanePosition' that is the data element as illustrated in FIG. 23 may be used.
- Specifically, the existing DE_LanePosition field may include "LanePosition ::= INTEGER {offTheRoad(-1), hardShoulder(0), outermostDrivingLane(1), ..} (-1..14)". Here, when a lane on which the object is positioned is off the road, the DE_LanePosition field may be expressed as offTheRoad. When the lane is positioned on the shoulder, the DE_LanePosition field may be expressed as HardShoulder. When the lane is positioned on the driving lane, the DE_LanePosition field may be expressed as OutermostDrivingLane(1) to (14) in turn based on the outermost lane.
- However, the lane information of the object included in the existing CPM message shows only a lane position of the vehicle that is now driving. The existing object lane information data element is the same as a data element used in a CAM and a DENM and corresponds to a field used to show a position of a lane in which it drives. On the other hand, the CP service is to show information about the surrounding objects. As a lane in which the object is positioned, the object may be positioned in a lane in which the measured vehicle drives, a lane approaching from the opposite lane, a lane crossing the measured vehicle, and the like.
- As described above, information may be insufficient to express lane information of the object using lanePosition (a. 40) which is the data element used in the existing CAM and DENM, and data efficiency may be reduced. Thus, the present disclosure proposes a new data element for efficiently expressing information of the lane position of the object, in order to solve the problem.
- FIG. 24 illustrates a data format of obj ect lane information according to an embodiment of the disclosure.
- Referring to FIG. 24, in an embodiment of the disclosure, a DF_ObjectLaneInfor field representing lane information of an object may include an 'ObjectLaneType' field (or data element, parameter) and/or an `ObjectLanePosition' field (or data element, parameter). In the embodiment, the ObjectLaneType field may include direction information of the object. This is described in detail below with reference to the figure.

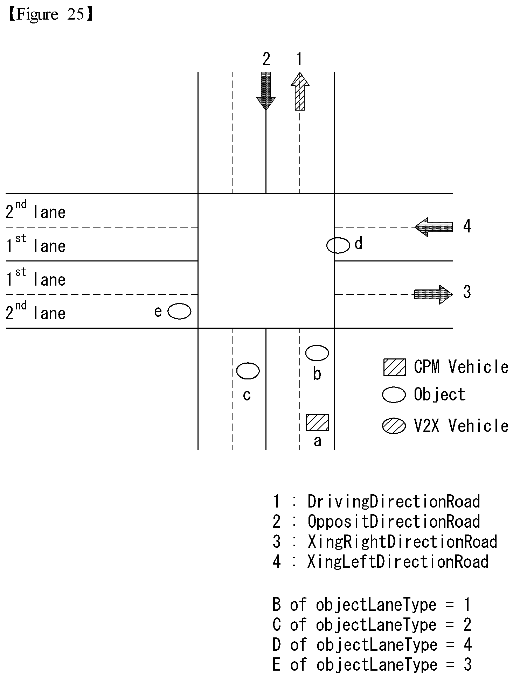

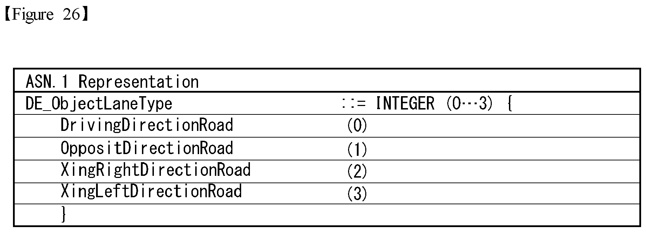

- FIGS. 25 and 26 illustrate object lane type information and data format according to an embodiment of the disclosure.
- Referring to FIG. 25, the ObjectLaneType field may include lane information where the sensed (detected) object is positioned. In particular, the ObjectLaneType field may include driving lane information where a detected object is positioned based on a lane of a driving direction of a vehicle (vehicle 'a' ) providing the CPS service.
- Specifically, an object (vehicle 'b' ) driving in the same lane as the vehicle 'a' providing the CPS service may be expressed as DrivingDirectionRoad. An object 'c' is a vehicle driving in the opposite direction and may be expressed as OppositDirectionRoad. An object 'd' that is positioned on a road crossing a driving lane in an intersection situation and drives from right to left may be expressed as XingLeftDirectionRoad. An object `e' that is positioned on a road running from left to right may be expressed as XingRightDirectionRoad.
- The above-described expression method may have a data format illustrated in FIG. 26. A lane on which an object drives in the same direction as an original vehicle (OV) may be set to `DrivingDirectionRoad(0)', and an opposite lane may be set to 'OppositeDirectionRoad (1)'.
- If an object exists in a lane crossing the driving lane, a lane crossing the driving lane and driving to the right may be set to XingRightDirectionRoad(2). If there is an object driving to the left, a lane driving to the left may be set to XingLeftDirectionRoad(3). In the embodiment, if a type of the road (or the driving direction of the object) is fixed through the ObjectLaneType, detailed land information of the object on the corresponding road may show a position of the lane through the 'ObjectLanePosition' field.

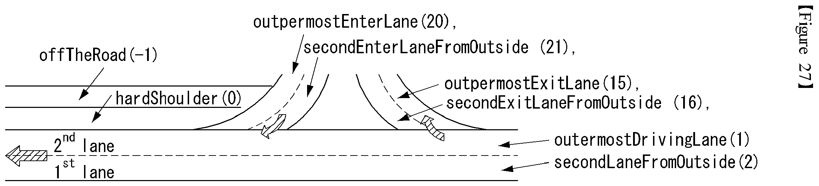

- FIG. 27 illustrates a method of expressing object lane information according to an embodiment of the disclosure.
- A lane position field included in the existing CPM message specifies only a shoulder lane. However, referring to FIG. 27, in an embodiment of the disclosure, the V2X vehicle providing the CP service may provide position information of an object that is positioned on an exit road or an entry road.
- Specifically, object lane information may include position information of an object that is positioned in an exit lane or an entry lane. As illustrated in FIG. 27, when the object is positioned on the exit road, i.e., when the object is positioned on an outermost lane, a lane position (or lane type) of the object may be set to 'outpermostExitLane'. When the object is positioned on a second exit land based on the outermost lane, the lane position (or lane type) of the object may be set to `secondtExitLaneFromOutside'. If several lanes are used, the lane position may be configured to express up to five lanes (15-19) from the outermost lane. When the object is positioned on the entry road, i.e., when the object is positioned on the outermost lane, the lane position (or lane type) of the object may be set to 'outpermostEenterLane'. If several lanes are used, the lane position may be configured to express up to five lanes (20-24) from the outermost lane.

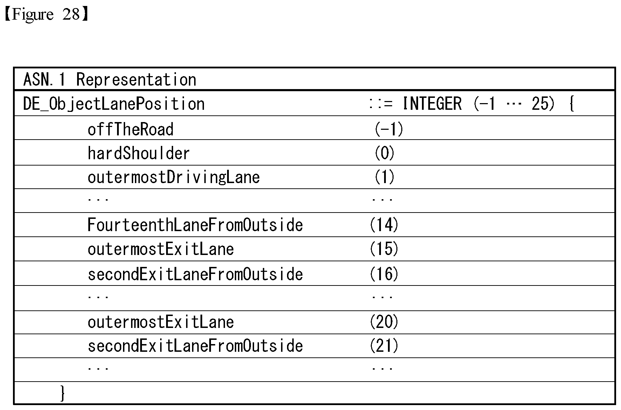

- FIG. 28 illustrates a data format representing object lane information according to an embodiment of the disclosure.
- Referring to FIG. 28, the expression method described with reference to FIG. 27 may use ASN. 1. In FIG. 28, it is assumed that information of the object positioned on the above-described entry/exit lane is included in an object lane position field (or data element). In another embodiment, information of the object positioned on the above-described entry/exit lane may be included in the above-described object lane type field.
- Referring again to FIG. 28, DE_ObjectLanePosition may include lane position information of the object positioned on the entry/exit lane. In addition to the existing lanePosition field, as described above with reference to FIG. 27, the object positioned on the exit road may be set to 15 to 19 from the outermost lane, and the object positioned on the entry road may be set to 20 to 24 from the outermost lane.

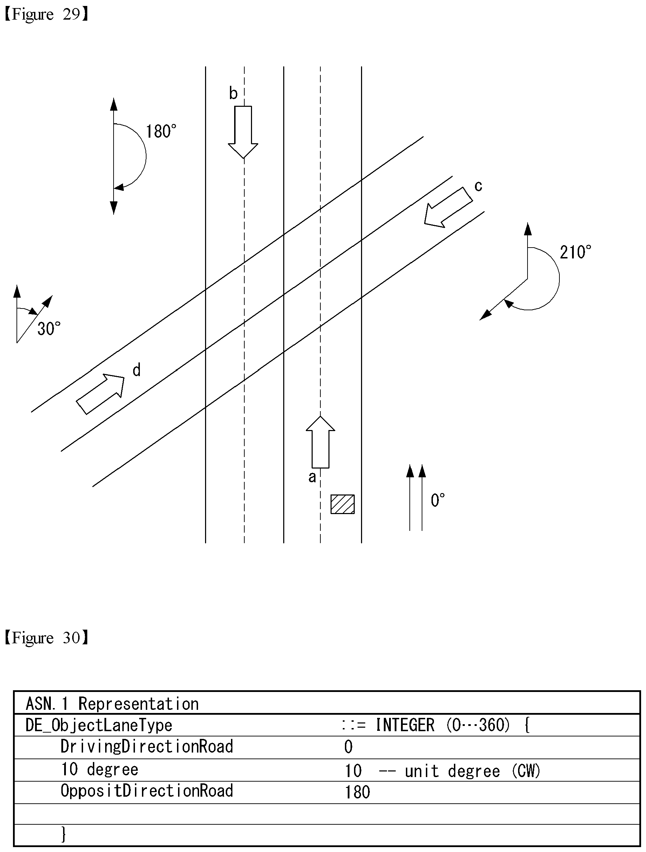

- FIG. 29 illustrates a method of expressing object lane information according to an embodiment of the disclosure.
- Unlike the conditions assumed in FIG. 25, if a driving lane of the vehicle is not in the form of a general intersection where the driving lane crosses at 90 degrees, there may be restrictions on the above-described expression method. Thus, an embodiment of the disclosure proposes improved object lane type information in order to solve the problem. According to the embodiment of the disclosure, the object lane type information can be generally used regardless of the number of lanes or the lane type.
- Referring to FIG. 29, an embodiment may transmit object lane information including a driving lane and angle information of a detected object based on the vehicle providing the CPS service.
- For example, if the vehicle providing the CPS service is on a lane that is driving, an ObjectLaneType value may have a zero value corresponding to 0 ° because the vehicle and the driving lane drive in the same direction. In case of an object that is driving in a lane 'b' driving in the opposite direction, an angle of 180 ° is formed between the driving lane and the opposite driving lane, and thus the ObjectLaneType value is set to 180 °. Lanes 'c' and 'd' where the intersection obliquely crosses the driving lane may be set to 210 ° and 30 °, respectively.
- FIG. 30 illustrates a data format representing object lane information according to an embodiment of the disclosure.
- The expression method described with reference to FIG. 29 may use ASN.1. In FIG. 32, it is assumed that information of the object positioned on the above-described entry/exit lane is included in an object lane type field (or data element). In another embodiment, information of the object positioned on the above-described entry/exit lane may be included in the above-described object lane position field.
- The object lane type field (or data element) may have an integer value. The integer value may have a range of 0 to 360, unit of 1 may be degree, and an angle may be set clockwise (counterclockwise).
- FIG. 31 illustrates configuration of a V2X communication device according to an embodiment of the disclosure. As described above, the V2X communication device may be referred to as a V2X communication device, a V2X device, etc.
- In FIG. 31, a V2X communication device 31000 may include a communication unit 31010, a processor 31020, and a memory 31030.
- The communication unit 31010 is connected to the processor 31020 and may transmit/receive a radio signal. The communication unit 31010 may up-convert data received from the processor 31020 into a transmission/reception band to transmit a signal, or may downconvert the received signal. The communication unit 31010 may implement at least one operation of the physical layer or the access layer.
- The communication unit 31010 may include a plurality of sub-RF units in order to perform communication according to a plurality of communication protocols. In one embodiment, the communication unit 31010 may perform data communication based on ITS-G5 wireless communication technology based on a physical broadcast technology of dedicated short range communication (DSRC), IEEE 802.11 and/or 802.11p standard, and IEEE 802.11 and/or 802.11p standard, 2G/3G/4G(LTE)/5G wireless cellular communication technology including satellite/wideband wireless mobile communication, wideband terrestrial digital broadcasting technology such as DVB-T/T2/ATSC, GPS technology, IEEE 1609 WAVE technology, and the like. The communication unit 31010 may include a plurality of transceivers that implement the respective communication technologies.
- The processor 31020 is connected to the RF unit 31030 and may implement operations of the layers of the V2X communication device. The processor 31020 may be configured to perform operations according to various embodiments of the present disclosure according to the figures and the description described above. Furthermore, at least one of a module, data, a program or software that implements operations of the V2X communication device 31000 according to various embodiment of the present disclosure may be stored in the memory 31010 and executed by the processor 31020.
- The memory 31010 is connected to the processor 31020 and stores various information for driving the processor 31020. The memory 31010 may be included inside the processor 31020 or installed outside the processor 31020, and may be connected to the processor 31020 by known means.
- The processor 31020 of the V2X communication device 31000 may perform the generation and transmission of a CPM described in the present disclosure. A method of generating and transmitting the CPM by the V2X communication device 31000 is described below.
- FIG. 32 is a flow chart illustrating a method of sending an ITS message by a V2X communication device according to an embodiment of the disclosure. In an embodiment of FIG. 32, the V2X communication device may be a V2X communication device of a vehicle. The vehicle has a sensor mounted thereon, and may detect a surrounding object using the sensor.
- The V2X communication device collects sensor data obtained from a plurality of sensors mounted on the vehicle to detect a surrounding object in S32010.
- The V2X communication device generates a CP message including sensor information on the plurality of sensors and object information on the detected surrounding object in S32020.
- The V2X communication device sends the CP message generated in the step S32020, in S32030.
- In an embodiment, a basic container may comprise a generation time field representing a generation time of the CP message and a station type field representing a type of the vehicle.
- In an embodiment, a sub-sensor type field may comprise manufacturer information or specification information for each of the sensor types.
- In an embodiment, the sub-sensor type field may comprise URL information for accessing raw data of the sensor data obtained from the plurality of sensors.
- In an embodiment, a perceived object container may comprise a classification field representing a type of the detected surrounding object and a lane information field representing lane information of the detected surrounding object.
- In an embodiment, the lane information field may comprise an object lane type field representing a direction of a lane on which the detected surrounding object is positioned, and an object lane position field representing a position of the lane on which the detected surrounding object is positioned.
- The embodiments described above are implemented by combinations of components and features of the present disclosure in predetermined forms. Each component or feature should be considered selectively unless specified separately. Each component or feature may be carried out without being combined with another component or feature. Moreover, some components and/or features are combined with each other and can implement embodiments of the present disclosure. The order of operations described in embodiments of the present disclosure may be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.
- Embodiments of the present disclosure can be implemented by various means, for example, hardware, firmware, software, or combinations thereof. When embodiments are implemented by hardware, one embodiment of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.
- When embodiments are implemented by firmware or software, one embodiment of the present disclosure can be implemented by modules, procedures, functions, etc. performing functions or operations described above. Software code can be stored in a memory and can be driven by a processor. The memory is provided inside or outside the processor and can exchange data with the processor by various well-known means.

### [Mode for Invention]

- In the present disclosure, both the device and method inventions have been mentioned, and the descriptions of both the device and method inventions can be complementarily applied.
- Various embodiments have been described in the best form for implementing the present disclosure.

### [Industrial Applicability]

- The present disclosure is used in a series of V2X communication fields.

## Claims

1. A method of sending a V2X message of a vehicle, the method comprising:
collecting sensor data obtained from a plurality of sensors mounted on the vehicle to detect (S32010) a surrounding object;
generating (S32020) a collective perception, CP, message including sensor information on the plurality of sensors and object information on the detected surrounding object; and
sending (S32030) the CP message,
wherein the CP message comprises (i) a header, (ii) a basic container, (iii) an originating station container including information of the vehicle, and (iv) a perceived object container including information on the detected surrounding object,
wherein the basic container comprises a generation time field representing a generation time of the CP message and a station type field representing a type of the vehicle,
wherein the originating station container comprises (i) a sensor type field representing sensor types for the plurality of sensors and (ii) a sub-sensor type field including additional information for the plurality of sensors according to the sensor types,
wherein information included in the sub-sensor type field is configured differently based on possible values of the sensor type field, and
wherein the sub-sensor type field is configured based on a specific value of the possible values of the sensor type field comprises a plurality of information on different features of sensor of a same sensor type which is determined based on the specific value of the sensor type field, and
wherein the perceived object container includes lane position information including (i) information for a lane position of the detected surrounding object and (ii) information for a lane type related to a direction of a lane on which the detected surrounding object is positioned.

2. The method of claim 1, wherein the sub-sensor type field comprises manufacturer information or specification information for each of the sensor types.

3. The method of claim 1, wherein the sub-sensor type field comprises URL information for accessing raw data of the sensor data obtained from the plurality of sensors.

4. A V2X communication device of a vehicle, comprising:
a memory (31030) configured to store data;
a communication unit (31010) configured to transmit and receive a radio signal including a collective perception, CP, message; and
a processor (31020) configured to control the memory (31030) and the communication unit (31010),
wherein the processor (31020) is configured to:
collect sensor data obtained from a plurality of sensors mounted on the vehicle to detect (S32010) a surrounding object;
generate (S32020) a collective perception, CP, message including sensor information on the plurality of sensors and object information on the detected surrounding object; and
send (S32030) the CP message,
wherein the CP message comprises (i) a header, (ii) a basic container, (iii) an originating station container including information of the vehicle, and (iv) a perceived object container including information on the detected surrounding object,
wherein the basic container comprises a generation time field representing a generation time of the CP message and a station type field representing a type of the vehicle,
wherein the originating station container comprises (i) a sensor type field representing sensor types for the plurality of sensors and (ii) a sub-sensor type field including additional information for the plurality of sensors according to the sensor types,
wherein information included in the sub-sensor type field is configured differently based on possible values of the sensor type field, and
wherein the sub-sensor type field is configured based on a specific value of the possible values of the sensor type field comprises a plurality of information on different features of sensor of a same sensor type which is determined based on the specific value of the sensor type field, and
wherein the perceived object container includes lane position information including (i) information for a lane position of the detected surrounding object and (ii) information for a lane type related to a direction of a lane on which the detected surrounding object is positioned.

5. The V2X communication device of claim 4, wherein the sub-sensor type field comprises manufacturer information or specification information for each of the sensor types.

6. The V2X communication device of claim 4, wherein the sub-sensor type field comprises URL information for accessing raw data of the sensor data obtained from the plurality of sensors.

## Patentansprüche

1. Verfahren zum Senden einer V2X-Nachricht eines Fahrzeugs, wobei das Verfahren Folgendes umfasst:
Sammeln von Sensordaten, die von mehreren am Fahrzeug montierten Sensoren erhalten wurden, um ein umgebendes Objekt zu erfassen (S32010);
Erzeugen (S32020) einer Sammelwahrnehmungs(CP)-Nachricht einschließlich Sensorinformationen über die mehreren Sensoren und Objektinformationen des erfassten umgebenden Objekts; und
Senden (S32030) der CP-Nachricht,
wobei die CP-Nachricht (i) einen Header, (ii) einen Basic Container, (iii) einen Container der Ausgangsstation einschließlich Fahrzeuginformationen und (iv) einen Container des erkannten Objekts einschließlich Informationen über das erfasste umgebende Objekt umfasst,
wobei der Basic Container ein Erstellungszeit-Feld, das die Erstellungszeit der CP-Nachricht darstellt, und ein Stationstyp-Feld, das einen Fahrzeugtyp darstellt, umfasst,
wobei der Container der Ausgangsstation (i) ein Sensortyp-Feld, das Sensortypen für die mehreren Sensoren darstellt, und (ii) ein Untersensortyp-Feld einschließlich zusätzlicher Informationen für die mehreren Sensoren entsprechend der Sensortypen umfasst,
wobei im Untersensortyp-Feld enthaltene Informationen basierend auf möglichen Werten des Sensortyp-Felds unterschiedlich konfiguriert sind und
wobei das Untersensortyp-Feld basierend auf einem speziellen Wert der möglichen Werte des Sensortyp-Felds konfiguriert ist, mehrere Informationen zu verschiedenen Merkmalen eines Sensors eines gleichen Sensortyps umfasst, der basierend auf dem speziellen Wert des Sensortyp-Felds bestimmt ist, und
wobei der Behälter des erkannten Objekts eine Spurpositionsinformation enthält, einschließlich (i) Informationen für eine Spurposition des erfassten umgebenden Objekts und (ii) Informationen für einen Spurtyp in Bezug zu einer Richtung einer Spur, auf der das erfasste umgebende Objekt positioniert ist.

2. Verfahren nach Anspruch 1, wobei das Untersensortyp-Feld Herstellerinformationen oder Spezifikationsinformationen für jeden der Sensortypen umfasst.

3. Verfahren nach Anspruch 1, wobei das Untersensortyp-Feld URL-Informationen für den Zugriff auf Rohdaten der von den mehreren Sensoren erhaltenen Sensordaten umfasst.

4. V2X-Kommunikationsvorrichtung eines Fahrzeugs, Folgendes umfassend:
einen Speicher (31030), der dazu ausgelegt ist, Daten zu speichern;
eine Kommunikationseinheit (31010), die dazu ausgelegt ist, ein Funksignal einschließlich einer Sammelwahrnehmungs(CP)-Nachricht zu senden und zu empfangen; und
einen Prozessor (31020), der dazu ausgelegt ist, den Speicher (31030) und die Kommunikationseinheit (31010) zu steuern,
wobei der Prozessor (31020) dazu ausgelegt ist:
Sensordaten zu sammeln, die von mehreren am Fahrzeug montierten Sensoren erhalten wurden, um ein umgebendes Objekt zu erfassen (S32010);
eine Sammelwahrnehmungs(CP)-Nachricht einschließlich Sensorinformationen über die mehreren Sensoren und Objektinformationen des erfassten umgebenden Objekts zu erfassen (S32020); und
die CP-Nachricht zu senden (S32030),
wobei die CP-Nachricht (i) einen Header, (ii) einen Basic Container, (iii) einen Container der Ausgangsstation einschließlich Fahrzeuginformationen und (iv) einen Container des erkannten Objekts einschließlich Informationen über das erfasste umgebende Objekt umfasst,
wobei der Basic Container ein Erstellungszeit-Feld, das die Erstellungszeit der CP-Nachricht darstellt, und ein Stationstyp-Feld, das einen Fahrzeugtyp darstellt, umfasst,
wobei der Container der Ausgangsstation (i) ein Sensortyp-Feld, das Sensortypen für die mehreren Sensoren darstellt, und (ii) ein Untersensortyp-Feld einschließlich zusätzlicher Informationen für die mehreren Sensoren entsprechend der Sensortypen umfasst,
wobei im Untersensortyp-Feld enthaltene Informationen basierend auf möglichen Werten des Sensortyp-Felds unterschiedlich konfiguriert sind und
wobei das Untersensortyp-Feld basierend auf einem speziellen Wert der möglichen Werte des Sensortyp-Felds konfiguriert ist, mehrere Informationen zu verschiedenen Merkmalen eines Sensors eines gleichen Sensortyps umfasst, der basierend auf dem speziellen Wert des Sensortyp-Felds bestimmt ist, und
wobei der Behälter des erkannten Objekts eine Spurpositionsinformation enthält, einschließlich (i) Informationen für eine Spurposition des erfassten umgebenden Objekts und (ii) Informationen für einen Spurtyp in Bezug zu einer Richtung einer Spur, auf der das erfasste umgebende Objekt positioniert ist.

5. V2X-Kommunikationsvorrichtung nach Anspruch 4, wobei das Untersensortyp-Feld Herstellerinformationen oder Spezifikationsinformationen für jeden der Sensortypen umfasst.

6. V2X-Kommunikationsvorrichtung nach Anspruch 4, wobei das Untersensortyp-Feld URL-Informationen für den Zugriff auf Rohdaten der von den mehreren Sensoren erhaltenen Sensordaten umfasst.

## Revendications

1. Procédé d'envoi d'un message V2X d'un véhicule, le procédé comprenant :
la collecte de données de capteurs obtenues auprès d'une pluralité de capteurs montés sur le véhicule pour détecter (S32010) un objet environnant ;
la génération (S32020) d'un message de perception collective, notée CP, comportant des informations de capteurs sur la pluralité de capteurs et des informations d'objet sur l'objet environnant détecté ; et
l'envoi (S32030) du message CP,
le message CP comprenant (i) un en-tête, (ii) un conteneur de base, (iii) un conteneur de station d'origine comportant des informations du véhicule, et (iv) un conteneur d'objet perçu comportant des informations sur l'objet environnant détecté,
le conteneur de base comprenant un champ temps de génération représentant un temps de génération du message CP et un champ type de station représentant un type du véhicule,
le conteneur de station d'origine comprenant (i) un champ type de capteur représentant des types de capteur pour la pluralité de capteurs et (ii) un champ sous-type de capteur comportant des informations supplémentaires pour la pluralité de capteurs selon les types de capteur,
les informations contenues dans le champ sous-type de capteur étant configurées différemment sur la base de valeurs possibles du champ type de capteur, et
le champ sous-type de capteur étant configuré sur la base d'une valeur particulière des valeurs possibles du champ type de capteur comprenant une pluralité d'informations sur des caractéristiques de capteur différentes d'un même type de capteur qui est déterminé sur la base de la valeur particulière du champ type de capteur, et
le conteneur d'objet perçu comportant des informations de position de voie comportant (i) des informations pour une position de voie de l'objet environnant détecté et (ii) des informations pour un type de voie lié à une direction d'une voie sur laquelle l'objet environnement détecté est positionné.

2. Procédé selon la revendication 1, le champ sous-type de capteur comprenant des informations de constructeur ou des informations de spécifications pour chacun des types de capteur.

3. Procédé selon la revendication 1, le champ sous-type de capteur comprenant des informations d'URL pour l'accès à des données brutes des données de capteurs obtenues auprès de la pluralité de capteurs.

4. Dispositif de communication V2X d'un véhicule, comprenant :
une mémoire (31030) configurée pour stocker des données ;
une unité de communication (31010) configurée pour émettre et recevoir un signal radio comportant un message de perception collective, notée CP ; et
un processeur (31020) configuré pour commander la mémoire (31030) et l'unité de communication (31010),
le processeur (31020) étant configuré pour :
collecter des données de capteurs auprès d'une pluralité de capteurs montés sur le véhicule pour détecter (S32010) un objet environnant ;
générer (S32020) un message de perception collective, notée CP, comportant des informations de capteurs sur la pluralité de capteurs et des informations d'objet sur l'objet environnant détecté ; et
envoyer (S32030) le message CP,
le message CP comprenant (i) un en-tête, (ii) un conteneur de base, (iii) un conteneur de station d'origine comportant des informations du véhicule, et (iv) un conteneur d'objet perçu comportant des informations sur l'objet environnant détecté,
le conteneur de base comprenant un champ temps de génération représentant un temps de génération du message CP et un champ type de station représentant un type du véhicule,
le conteneur de station d'origine comprenant (i) un champ type de capteur représentant des types de capteur pour la pluralité de capteurs et (ii) un champ sous-type de capteur comportant des informations supplémentaires pour la pluralité de capteurs selon les types de capteur,
les informations contenues dans le champ sous-type de capteur étant configurées différemment sur la base de valeurs possibles du champ type de capteur, et
le champ sous-type de capteur étant configuré sur la base d'une valeur particulière des valeurs possibles du champ type de capteur comprenant une pluralité d'informations sur des caractéristiques de capteur différentes d'un même type de capteur qui est déterminé sur la base de la valeur particulière du champ type de capteur, et
le conteneur d'objet perçu comportant des informations de position de voie comportant (i) des informations pour une position de voie de l'objet environnant détecté et (ii) des informations pour un type de voie lié à une direction d'une voie sur laquelle l'objet environnement détecté est positionné.

5. Dispositif de communication V2X selon la revendication 4, le champ sous-type de capteur comprenant des informations de constructeur ou des informations de spécifications pour chacun des types de capteur.

6. Dispositif de communication V2X selon la revendication 4, le champ sous-type de capteur comprenant des informations d'URL pour l'accès à des données brutes des données de capteurs obtenues auprès de la pluralité de capteurs.
